# EUROPÄISCHE PATENTSCHRIFT

(11) **EP 3 799 999 B1**
(45) Veröffentlichungstag und Bekanntmachung des Hinweises auf die Patenterteilung: **22.02.2023**
(21) Anmeldenummer: 20204889.8
(22) Anmeldetag: 16.11.2015
(51) Int. Cl.: B23K 26/04, B23K 26/53, B23K 26/064, B23K 103/00, G02B 5/18, G02B 27/09

(54) **OPTISCHES SYSTEM ZUR STRAHLFORMUNG**
OPTICAL SYSTEM FOR BEAM SHAPING
SYSTÈME OPTIQUE DE MISE EN FORME D'UN FAISCEAU

(30) Priorität: 19.11.2014 DE 102014116957
(43) Veröffentlichungstag der Anmeldung: 07.04.2021
(62) Teilanmeldung aus: 15804081.6
(73) Patentinhaber: TRUMPF Laser- und Systemtechnik GmbH, 71254 Ditzingen (DE)
(72) Erfinder: FLAMM, Daniel, 70806 Kornwestheim (DE); KAISER, Myriam, 71254 Ditzingen (DE); KLEINER, Jonas, 71229 Leonberg (DE); GROSSMANN, Daniel, 78713 Schramberg (DE); KUMKAR, Malte, 99425 Weimar (DE)
(74) Vertreter: Grättinger Möhring von Poschinger Patentanwälte Partnerschaft mbB

(56) Entgegenhaltungen:
- EP-A1- 1 386 689
- WO-A1-2009/040103
- DE-A1- 10 062 453

## Beschreibung

Die vorliegende Erfindung betrifft ein optisches System zur Strahlformung eines Laserstrahls und insbesondere zur Strahlformung eines Laserstrahls für die Bearbeitung von für den Laserstrahl weitgehend transparenten Materialien. Ferner betrifft die Erfindung ein Verfahren zur Strahlformung.

Die Möglichkeiten der Nutzung der Absorption von Licht zur Bearbeitung eines Werkstücks, insbesondere durch das Einbringen von lokalisierten Modifikationen in das Werkstück, sind vielfältig. So eröffnet eine sogenannte Volumenabsorption, d.h. eine nicht auf die Oberfläche beschränkte Absorption, die Möglichkeit, für den Laserstrahl weitgehend transparente, sprödharte Materialien zu bearbeiten. Allgemein wird eine Volumenabsorption durch eine Art nichtlinearer Absorption begünstigt, bei der erst bei einer materialabhängigen (Schwellen-)Intensität eine Wechselwirkung mit dem Material stattfindet.

Unter nichtlineare Absorption wird hierin eine intensitätsabhängige Absorption von Licht verstanden, die primär nicht auf der direkten Absorption des Lichts basiert. Stattdessen basiert sie auf einer Steigerung der Absorption während der Wechselwirkung mit dem einfallenden Licht, meist ein zeitlich begrenzter Laserpuls. Dabei können Elektronen durch inverse Bremsstrahlung so viel Energie aufnehmen, dass durch Stöße weitere Elektronen freigesetzt werden, so dass die Rate der Elektronenerzeugung die der Rekombination übersteigt. Unter gewissen Bedingungen können die für die lawinenartige Absorption erforderlichen Startelektronen bereits zu Beginn vorliegen oder durch eine vorhandene Restabsorption mittels linearer Absorption generiert werden. Beispielsweise kann bei ns-Laserpulsen eine Anfangsionisation zu einer Temperaturerhöhung führen, durch die die Zahl der freien Elektronen und damit die nachfolgende Absorption ansteigen. Unter anderen Bedingungen können derartige Startelektronen durch Mehrphotonen- oder Tunnelionisation als Beispiele für bekannte nichtlineare Absorptionsmechanismen generiert werden. Bei ultrakurzen Laserpulsen mit beispielsweise sub-ns-Pulsdauern kann so eine lawinenartige Erzeugung von Elektronen genutzt werden.

Eine Volumenabsorption kann bei für den Laserstrahl weitgehend transparenten Materialen (hierin kurz als transparente Materialien bezeichnet) zur Ausbildung einer Modifikation des Materials in einer langgezogenen Fokuszone eingesetzt werden. Derartige Modifikationen können ein Trennen, Bohren oder Strukturieren des Materials ermöglichen. Zum Trennen können beispielsweise Reihen von Modifikationen erzeugt werden, die ein Brechen innerhalb oder entlang der Modifikationen auslösen. Ferner ist es bekannt, zum Trennen, Bohren und Strukturieren Modifikationen zu generieren, die ein selektives Ätzen der modifizierten Bereiche ermöglichen (SLE: selective laser etching).

Die Erzeugung einer langgezogenen Fokuszone kann mithilfe von apodisierten Bessel-Strahlen (hierin auch als Quasi-Bessel-Strahl bezeichnet) erfolgen. Derartige Strahlprofile können z.B. mit einem Axicon oder einem räumlichen Lichtmodulator (SLM: spatial light modulator) und einem einfallenden Laserstrahl mit einem Gaußschen Strahlprofil geformt werden. Eine anschließende Abbildung in ein transparentes Werkstück führt zu den für die Volumenabsorption erforderlichen Intensitäten. Quasi-Bessel-Strahlen weisen - wie Bessel-Strahlen - üblicherweise eine ringförmige Intensitätsverteilung im Fernfeld des im Werkstück vorliegenden Strahlprofils auf. Die Berechnung von Phasenverläufen zur Strahlformung von Quasi-Bessel-Strahlen z.B. mit einem SLM ist in Leach et al., "Generation of achromatic Bessel beams using a compensated spatial light modulator," Opt. Express 14, 5581-5587 (2006) beschrieben.

Ferner sind Anordnungen zur Ausbildung einer Aufreihung von Intensitätsüberhöhungen z.B. mithilfe von Multifokallinsen bekannt. Dabei erfolgt im Fernfeld, d.h. bei der Fokussierung, eine Phasenbeeinflussung des zu fokussierenden Laserstrahls, welche die Ausbildung longitudinal versetzter Fokuszonen zur Folge hat.

Weitere optische Systeme sind aus WO 2009/040103 A1 und DE 100 62 453 A1 bekannt.

So offenbart WO 2009/040103 A1 eine Vorrichtung zur Laserbearbeitung, die einen Laser mit einem Resonator umfasst, der eingerichtet ist, einen Laserstrahl mit einer vorbestimmten Kaustik zu erzeugen. Ferner umfasst die Vorrichtung ein optisches Element, z.B. ein Vortex-Spiegel, zur Transformation des Laserstrahls in einen Strahl mit ringförmiger Intensitätsverteilung entlang eines Bereichs der Kaustik des Laserstrahls, sowie eine Fokussieroptik. Die ringförmige Intensitätsverteilung weist im Bereich des kleinsten Durchmessers der Kaustik entlang der Propagationsrichtung des Strahls in einer Ebene senkrecht zur Propagationsrichtung des Strahls einen nach der 2.-Momente-Methode bestimmten Strahlradius und eine bei einer Intensität von 50% der Maximalintensität in radialer Richtung bestimmte Ringbreite auf, wobei der Quotient aus der Ringbreite und dem Strahlradius kleiner als 0,6, bevorzugt kleiner als 0,5 ist.

Einem Aspekt dieser Offenbarung liegt die Aufgabe zugrunde, ein optisches System anzugeben, das eine Strahlformung für eine maßgeschneiderte Volumenabsorption ermöglicht. Insbesondere liegt die Aufgabe zugrunde, für die Bearbeitung transparenter Werkstoffe in Strahlausbreitungsrichtung langgezogene, schlanke Strahlprofile mit hohem Aspektverhältnis für Laserbearbeitungsanwendungen bereitzustellen.

Zumindest eine dieser Aufgaben wird gelöst durch ein optisches System nach Anspruch 1, eine Laserbearbeitungsanlage nach Anspruch 11 und durch ein Verfahren zur Strahlformung eines Laserstrahls nach Anspruch 14. Weiterbildungen sind in den Unteransprüchen angegeben.

In einem Aspekt wird ein optisches System zur Strahlformung eines Laserstrahls für die Bearbeitung eines insbesondere transparenten Materials durch Modifizieren des Materials in einer in Propagationsrichtung langgezogenen Fokuszone offenbart. Das optische System weist ein Strahlformungselement auf, das dazu ausgebildet ist, den Laserstrahl mit einem transversalen Eingangsintensitätsprofil aufzunehmen und dem Laserstrahl einen strahlformenden Phasenverlauf über das transversale Eingangsintensitätsprofil aufzuprägen. Ferner weist das optische System eine Nahfeldoptik auf, die strahlabwärts mit einem Strahlformungsabstand zum Strahlformungselement angeordnet ist und die dazu ausgebildet ist, den Laserstrahl in die Fokuszone zu fokussieren. Dabei ist der aufgeprägte Phasenverlauf derart, dass dem Laserstrahl ein virtuelles, vor dem Strahlformungselement liegendes optisches Bild der langgezogenen Fokuszone zugeordnet ist, und der Strahlformungsabstand einer Propagationslänge des Laserstrahls entspricht, in der der aufgeprägte Phasenverlauf das transversale Eingangsintensitätsprofil in ein transversales Ausgangsintensitätsprofil im Bereich der Nahfeldoptik überführt, welches im Vergleich mit dem Eingangsintensitätsprofil ein außerhalb der Strahlachse liegendes lokales Maximum aufweist.

In einem weiteren Aspekt wird ein optisches System zur Strahlformung eines Laserstrahls für die Bearbeitung eines insbesondere transparenten Materials durch Modifizieren des Materials offenbart. Das optische System weist ein Strahlformungselement zur Aufprägung eines Phasenverlaufs eines inversen Quasi-Bessel-Strahl-artigen Strahlprofils und/oder eines inversen Quasi-Airy-Strahl-artigen Strahlprofils auf den Laserstrahl und eine Nahfeldoptik zur Fokussierung des phasenaufgeprägten Strahls auf. Der Phasenverlauf ist derart gewählt, dass die Fokussierung des phasenaufgeprägten Strahls ein inverses Quasi-Bessel-Strahl-artiges Strahlprofil und/oder ein inverses Quasi-Airy-Strahl-artiges Strahlprofil mit einer in Propagationsrichtung des Laserstrahls langgezogenen Fokuszone ausbildet, bei dem insbesondere nur ein Zentralbereich des einfallenden Laserstrahls Beiträge zu einem strahlabwärts liegenden Ende der langgezogenen Fokuszone liefert.

In einem weiteren Aspekt weist eine Laserbearbeitungsanlage für die Bearbeitung eines insbesondere transparenten Materials mit einem Laserstrahl durch Modifizieren des Materials in einer in Propagationsrichtung des Laserstrahls langgezogenen Fokuszone eine Laserstrahlquelle, ein derartiges optisches System und eine Werkstücklagerungseinheit zur Lagerung des Materials als zu bearbeitendes Werkstück auf.

In einem weiteren Aspekt wird ein Verfahren zur Strahlformung eines Laserstrahls mit einem transversalen Eingangsintensitätsprofil für die Bearbeitung eines insbesondere transparenten Materials durch Modifizieren des Materials in einer in Propagationsrichtung langgezogenen Fokuszone offenbart. Das Verfahren umfasst den Schritt eines Aufprägens eines strahlformenden Phasenverlaufs über das transversale Eingangsintensitätsprofil, wobei der aufgeprägte Phasenverlauf derart ist, dass dem Laserstrahl ein virtuelles optisches Bild der langgezogenen Fokuszone zugeordnet ist. Ferner umfasst das Verfahren den Schritt des Propagierens des Laserstrahls über einen Strahlformungsabstand, nach dem der aufgeprägte Phasenverlauf das transversale Eingangsintensitätsprofil in ein transversales Ausgangsintensitätsprofil übergeführt hat, so dass das transversales Ausgangsintensitätsprofil im Vergleich zum Eingangsintensitätsprofil ein außerhalb der Strahlachse liegendes lokales Maximum aufweist. Ferner umfasst das Verfahren den Schritt des Fokussierens des Laserstrahls in die Fokuszone zur Ausbildung eines Nahfeldes basierend auf dem Ausgangsintensitätsprofil.

In einem weiteren Aspekt wird ein Verfahren zur Lasermaterialbearbeitung eines insbesondere transparenten Materials durch Modifizieren des Materials mit einem Laserstrahl offenbart, dass die folgenden Schritten aufweist: Erzeugen eines inversen Quasi-Bessel-Strahl-artigen Laserstrahlprofils und/oder eines Laserstrahlprofils eines inversen beschleunigten Strahls, hierein auch als Quasi-Airy-Strahl-artiges Laserstrahlprofil bezeichnet, mit einem in einer in Propagationsrichtung langgezogenen Fokuszone durch Phasenmodulieren des Laserstrahls und Positionieren der langgezogenen Fokuszone zumindest teilweise in dem zu bearbeitenden Material.

In einem weiteren Aspekt wird das Verwenden eines inversen Quasi-Bessel-Strahl-artiges Strahlprofils und/oder eines inversen Quasi-Airy-Strahl-artigen Strahlprofils zur Lasermaterialbearbeitung eines insbesondere transparenten Materials durch Modifizieren des Materials innerhalb einer langgezogenen Fokuszone des inversen Quasi-Bessel-Strahl-artigen Strahlprofils und/oder des inversen Quasi-Airy-Strahl-artiges Strahlprofils offenbart. Dabei kann ein inverses Quasi-Bessel-Strahl-artiges Strahlprofil und/oder ein inverses Quasi-Airy-Strahl-artiges Strahlprofil beispielsweise durch eines oder mehrerer der hierin als charakterisierend offenbarten Merkmale gekennzeichnet sein, insbesondere durch die Zuordnung eines virtuellen Bildes vor dem Strahlformungselement, den im Vergleich mit entsprechenden konventionellen Strahlen invertierte radialen Amplituden-/Intensitätsverläufen und die im Wesentlichen festliegenden Position des Endes der Fokuszone.

Hierin werden Konzepte offenbart, dies es erlauben, zumindest teilweise Aspekte aus dem Stand der Technik zu verbessern. Insbesondere ergeben sich weitere Merkmale und deren Zweckmäßigkeiten aus der folgenden Beschreibung von Ausführungsformen anhand der Figuren. Von den Figuren zeigen:
- Fig. 1: eine schematische Darstellung eines optischen Systems zur Strahlformung eines Laserstrahls,
- Fig. 2: eine schematische Darstellung einer Laserbearbeitungsvorrichtung mit einem optischen System gemäß Fig. 1 für die Materialbearbeitung,
- Fig. 3: eine schematische Darstellung eines optischen Systems zur Erläuterung der optischen Funktionsweise,
- Fig. 4: ein Beispiel einer longitudinalen Intensitätsverteilung in einer langgezogenen Fokuszone nach Abbildung eines virtuellen optischen Bildes,
- Fig. 5: einen ZR-Schnitt der in Fig. 4 gezeigten longitudinalen Intensitätsverteilung,
- Fig. 6: eine beispielhafte experimentelle Studie zur Modifikation eines transparenten Materials in einer langgezogenen Fokuszone gemäß den Figuren 4 und 5,
- Fig. 7: eine schematische Darstellung zur Erläuterung der Erzeugung und Abbildung einer realen Intensitätsüberhöhung,
- Fig. 8: ein Beispiel einer longitudinalen Intensitätsverteilung in einer langgezogenen Fokuszone nach Abbildung einer realen Intensitätsüberhöhung gemäß Fig. 7,
- Fig. 9: eine schematische Darstellung eines ersten Beispiels eines auf einem Hohlkegel-Axicon basierenden optischen Systems,
- Fig. 10: eine schematische Darstellung eines zweiten Beispiels eines auf einem Hohlkegel-Axicon basierenden optischen Systems,
- Fig. 11A und Fig. 11B: schematische Darstellungen von Beispielen für auf einem reflektiven Axicon basierenden optischen Systemen,
- Fig. 12: eine schematische Darstellung eines Beispiels eines auf einem räumlichen Lichtmodulator basierenden optischen Systems,
- Fig. 13: eine schematische Darstellung eines Beispiels eines auf einem transmittiven diffraktiven optischen Element basierenden optischen Systems,
- Fig. 14: eine schematische Darstellung eines Beispiels eines Phasenverlaufs in einem diffraktiven optischen Element in einem optischen System gemäß Fig. 13,
- Fig. 15: einen beispielhaften Intensitätsquerschnitt eines Ausgangsintensitätsprofils in einem optischen System gemäß Fig. 13,
- Fig. 16: eine XY-Aufsicht des Ausgangsintensitätsprofils des in Fig. 15 gezeigten Intensitätsquerschnitts,
- Fig. 17: eine schematische Darstellung eines Beispiels eines optischen Systems mit Filterung nicht-phasenmodulierter Strahlanteile,
- Fig. 18: eine schematische Darstellung eines Beispiels eines auf einem diffraktiven optischen Element basierenden optischen Systems mit einem linearen Phasenbeitrag zur Separierung eines phasenmodulierten Strahlanteils,
- Fig. 19: eine schematische Darstellung eines Beispiels eines optischen Systems mit einer Scan-Vorrichtung,
- Fig. 20: eine schematische Darstellung zur Erläuterung des Abbildungssystems eines optischen Systems,
- Fig. 21: eine schematische Darstellung zur Erläuterung eines optischen Systems bei Einfall eines konvergierenden Laserstrahls,
- Fig. 22: eine schematische Darstellung zur Erläuterung eines optischen Systems mit Divergenzanpassung,
- Fig. 23: einen beispielhaften Intensitätsquerschnitt eines Ausgangsintensitätsprofils in einem optischen System zur Erzeugung eines Flat-top-Intensitätsprofils,
- Fig. 24: eine XY-Aufsicht des Ausgangsintensitätsprofils des in Fig. 23 gezeigten Intensitätsquerschnitts,
- Fig. 25: ein Beispiel einer longitudinalen Intensitätsverteilung, das sich aus dem Ausgangsintensitätsprofil der Figuren 23 und 24 ergibt,
- Fig. 26: eine beispielhafte experimentelle Studie zur Modifikation eines transparenten Materials in einer langgezogenen Fokuszone gemäß Fig. 25,
- Fig. 27: ein Beispiel einer longitudinalen Intensitätsverteilung unter Verwendung einer multifokalen Nahfeldoptik,
- Fig. 28: eine schematische Darstellung eines Beispiels eines Phasenverlaufs zur Erzeugung einer inversen Airy-Strahl-artigen Strahlform mit einem diffraktiven optischen Element zur Verwendung in einem optischen System gemäß Fig. 13,
- Fig. 29: einen beispielhaften Intensitätsquerschnitt eines Ausgangsintensitätsprofils zur Erzeugung der inversen Airy-Strahl-artigen Strahlform gemäß Fig. 28,
- Fig. 30: eine XY-Aufsicht des Ausgangsintensitätsprofils des in Fig. 29 gezeigten Intensitätsquerschnitts,
- Fig. 31: ein Beispiel einer longitudinalen Intensitätsverteilung in einer langgezogenen Fokuszone für die mit dem Phasenverlauf gemäß Fig. 28 erzeugte inversen Airy-Strahl-artigen Strahlform,
- Fig. 32: eine schematische Darstellung zur Erläuterung der Abbildung eines virtuellen Bildes in Kombination mit der Abbildung einer realen Intensitätsüberhöhung,
- Fig. 33A bis Fig. 33D: Strahlprofile für einen inversen Quasi-Bessel-Strahl bei der Propagation vom Strahlformungselement zur Nahfeldoptik und
- Fig. 34: einen Amplitudenverlauf für einen Schnitt entlang der Strahlachse Z zur Verdeutlichung der Positionen der Strahlprofile der Figuren 33A bis 33D.

Hierin beschriebene Aspekte basieren zum Teil auf der Erkenntnis, dass aufgrund der bei der Laserbearbeitung benötigten hohen Intensitäten schon während der Aufbereitung des Laserstrahls Intensitäten vorliegen können, die zur Beschädigung von optischen Elementen führen. Mit Blick darauf wurde ferner erkannt, dass die Erzeugung einer langgezogenen Fokuszone im Werkstück auf der Abbildung eines virtuellen Strahlprofils basieren kann. Durch dieses Konzept der Abbildung eines virtuellen Strahlprofils können im optischen System Bereiche mit Intensitätsspitzen reduziert oder sogar vermieden werden. Es wurde ferner erkannt, dass einem Laserstrahl ein dem virtuellen Strahlprofil zugeordneter Phasenverlauf aufgeprägt werden kann, welcher die gewünschte Änderung der Intensitätsverteilung im Fernfeld bewirkt. Insbesondere wurde erkannt, dass durch eine Fernfeldverteilung, die auf ein derartiges virtuelles Strahlprofil zurückgeht, beispielsweise inverse Quasi-Bessel-Strahl-artige oder inverse Quasi-Airy-Strahl-artige Intensitätsverläufe, speziell ausgelegte Intensitätsverläufe und insbesondere Überlagerungen derselben in der Fokuszone erzeugt werden können. Bei derartigen Intensitätsverläufen kann ein lateraler Energieeintrag in die Fokuszone stattfinden, was insbesondere ein Bearbeiten transparenter Materialen erlaubt. Es wurde ferner erkannt, dass im Vergleich mit Systemen zur Abbildung einer reellen Intensitätsüberhöhung das Konzept der Abbildung eines virtuellen Strahlprofils zu kürzeren Bauformen von derartigen optischen Systemen führen kann.

Eine langgezogene Fokuszone bezieht sich hier auf eine durch das optische System bestimmte dreidimensionale Intensitätsverteilung, die in dem zu bearbeitenden Material das räumliche Ausmaß der Wechselwirkung und damit der Modifikation bestimmt. Die langgezogene Fokuszone bestimmt somit einen langgezogenen Bereich, in dem im zu bearbeitenden Material eine Fluenz/Intensität vorliegt, welche über der für die Bearbeitung/Modifikation relevanten Schwellenfluenz/-intensität liegt. Üblicherweise spricht man von langgezogenen Fokuszonen, wenn die dreidimensionale Intensitätsverteilung hinsichtlich einer Zielschwellenintensität durch ein Aspektverhältnis (Ausdehnung in Ausbreitungsrichtung im Verhältnis zur lateralen Ausdehnung) von mindestens 10:1, beispielsweise 20:1 und mehr oder 30:1 und mehr, gekennzeichnet ist. Eine derartige langgezogene Fokuszone kann zu einer Modifikation des Materials mit einem ähnlichen Aspektverhältnis führen. In einigen Ausführungsformen können sich z.B. auch in Ausbreitungsrichtung parallel zu einander verlaufende Fokuszonen ausbilden, von denen jede ein entsprechendes Aspektverhältnis aufweist. Allgemein kann bei derartigen Aspektverhältnissen eine maximale Änderung der lateralen Ausdehnung der (wirksamen) Intensitätsverteilung über die Fokuszone im Bereich von 50 % und weniger, beispielsweise 20 % und weniger, beispielsweise im Bereich von 10 % und weniger, liegen.

Dabei kann in einer langgezogenen Fokuszone die Energie im Wesentlichen über die gesamte Länge der hervorgerufenen Modifikation lateral zugeführt werden. Dies hat zur Folge, dass eine Modifikation des Materials im Anfangsbereich der Modifikationszone nicht oder zumindest kaum Abschirmeffekte auf den Teil des Laserstrahls aufweist, welcher eine Modifikation des Materials strahlabwärts, d.h. z.B. im Endbereich der Modifikationszone, bewirkt. In diesem Sinne kann ein Gaußscher Strahl keinen vergleichbaren langgezogenen Fokus erzeugen, da die Energiezufuhr im Wesentlichen longitudinal und nicht lateral erfolgt.

Die Transparenz eines für den Laserstrahl weitgehend transparenten Materials bezieht sich hierin auf die lineare Absorption. Für Licht unterhalb der Schwellenfluenz/-intensität kann ein für den Laserstrahl weitgehend transparentes Material beispielsweise auf einer Länge bis zum hinteren Ende der Modifikation z.B. weniger als 20 % oder sogar weniger als 10 % des einfallenden Lichts absorbieren.

Hierin beschriebene Aspekte basieren zum Teil ferner auf der Erkenntnis, dass durch eine gezielte Strahlformung, beispielsweise mit einem diffraktiven optischen Element (DOE), die im Material durch nichtlineare Absorption entstehende Dichte freier Elektronen maßgeschneidert werden kann. Entlang der dadurch entstehenden Modifikationen kann eine Rissbildung gezielt geführt werden, welche dann zum Trennen des Werkstücks führt.

Hierin beschriebene Aspekte basieren zum Teil ferner auf der Erkenntnis, dass für ein DOE im Phasenverlauf einer Phasenmaske mehrere Phasenverläufe, beispielsweise in entsprechenden Segmenten, vorgesehen werden können. Dadurch können insbesondere die Vorteile des Konzepts eines virtuellen optischen Bildes, beispielsweise einer inversen Quasi-Bessel-Strahl-förmigen Strahlform, bei der Überlagerung der Abbildungen mehrerer derartiger virtueller Bilder (in longitudinaler oder lateraler Richtung) genutzt werden, wodurch auch die Wechselwirkung (z.B. Interferenz) und räumliche Konstellation mehrerer Abbildungen Auswirkung auf die Ausformung der gemeinsamen Fokuszone haben kann. Ferner wurde erkannt, dass sich dadurch asymmetrische "gemeinsame" Fokuszonen erzeugen lassen, die beispielsweise bei der Materialbearbeitung einen Vorzug für eine bestimmte Vorschubrichtung oder eine bestimmte Trennrichtung ergeben. Überdies wurde erkannt, dass sich derartige Vorzugsrichtung durch Ausrichten/Drehen des DOE innerhalb eines optischen Systems während der Laserbearbeitung an gewünschte Bearbeitungstrajektorien anpassen lassen. Für digitale Phasenmasken (SLMs etc...) kann ferner eine direkte Ansteuerung des Phasenverlaufs vorgenommen werden, um die Vorzugsrichtung nachzuführen.

Hierin beschriebene Aspekte basieren zum Teil ferner auf der Erkenntnis, dass durch den Einsatz eines DOE zusätzliche Phasenverläufe auf den Strahl aufgeprägt werden können, die beispielsweise den Aufbau eines zugrunde liegenden optischen Systems und/oder die Isolation eines Nutzstrahlanteils vereinfachen.

In anderen Worten werden Nachteile des Standes der Technik in einigen Ausführungsformen durch ein Optikkonzept zumindest teilweise aufgehoben, bei dem das im Bereich des Werkstücks gelegene, in Ausbreitungsrichtung langgezogene Strahlprofil durch eine Abbildung eines erzeugten virtuellen Strahlprofils erfolgt. In einigen Ausführungsformen erlaubt das Optikkonzept ferner sowohl eine Filtermöglichkeit für unerwünschte Strahlanteile beispielsweise in der Region der Fourier-Ebene des Strahlprofils als auch eine Separierung der Strahlformung von der Fokussierung.

Die sich aus diesen Erkenntnissen ergebenden Systeme und Verfahren können unter anderem ein Trennen von transparenten, sprödharten Materialien mit hoher Geschwindigkeit und bei guter Qualität der Schnittkante ermöglichen. Ferner können derartige Systeme und Verfahren eine Trennung ohne einen wie bei abtragenden Verfahren entstehenden Taperwinkel erlauben. Insbesondere beim Trennen basierend auf nicht abtragenden Modifikationen kann sich auch kein oder nur ein geringer Abtrag ergeben, mit der Konsequenz, dass das Material nach der Bearbeitung nur wenig Partikel auf der Oberfläche aufweist.

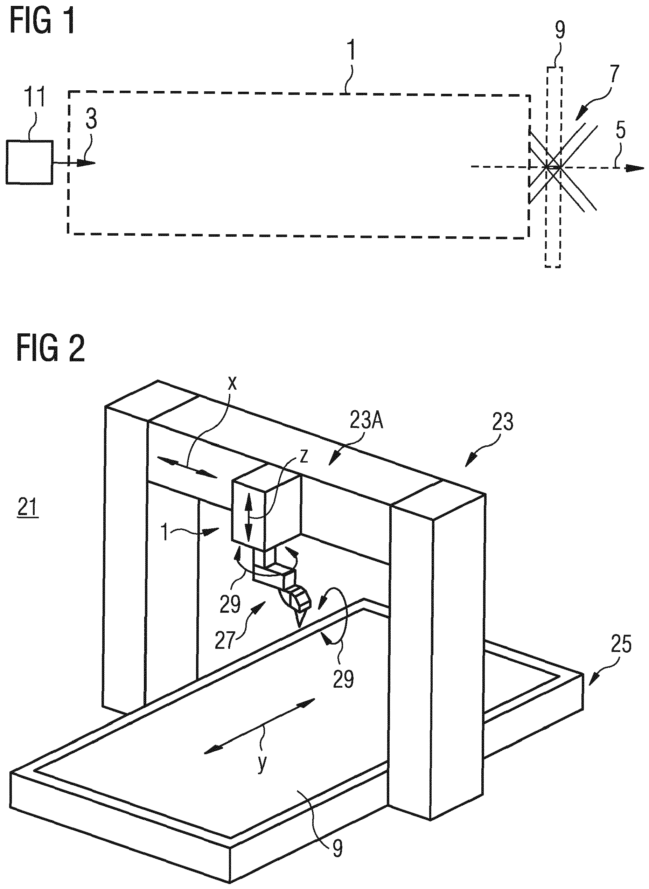

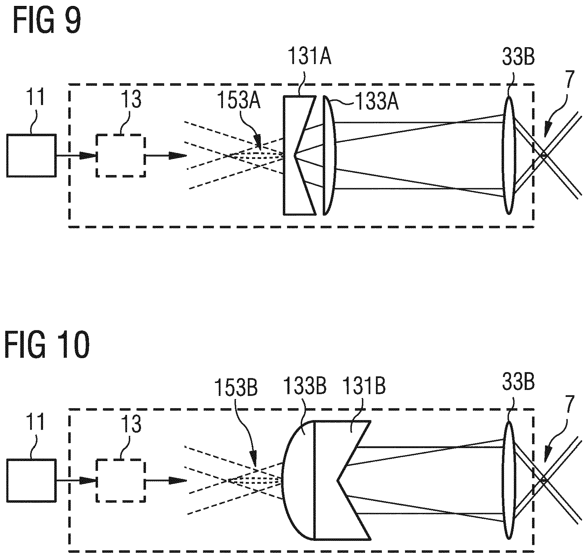

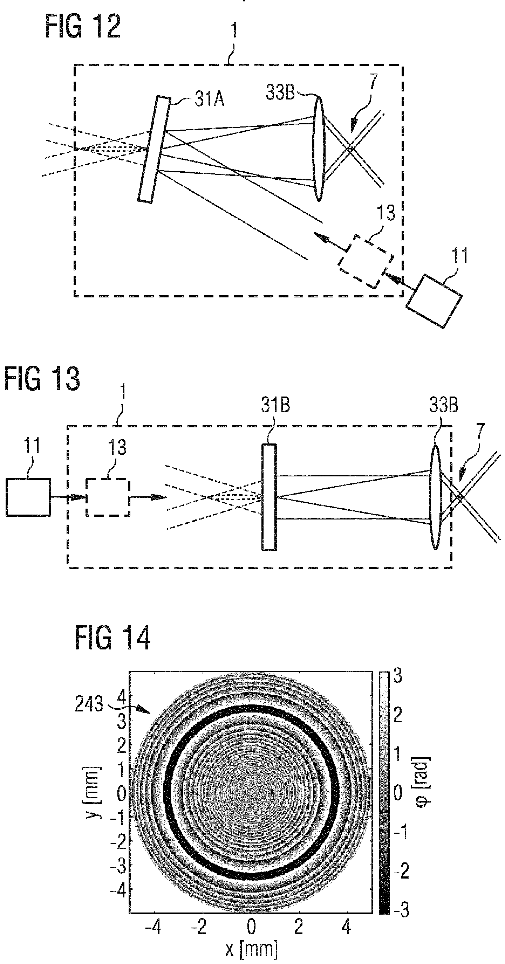

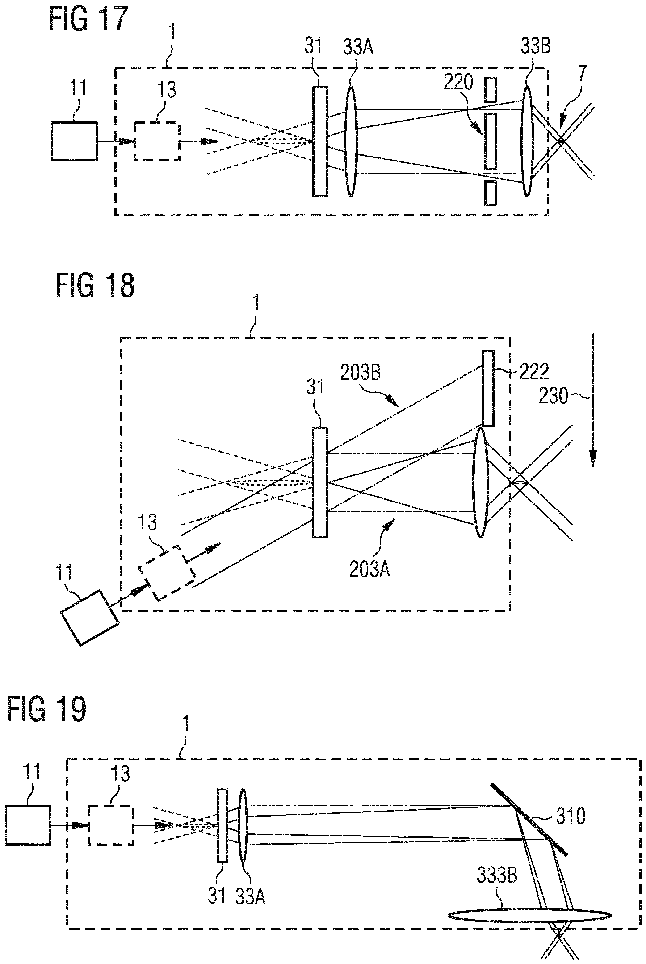

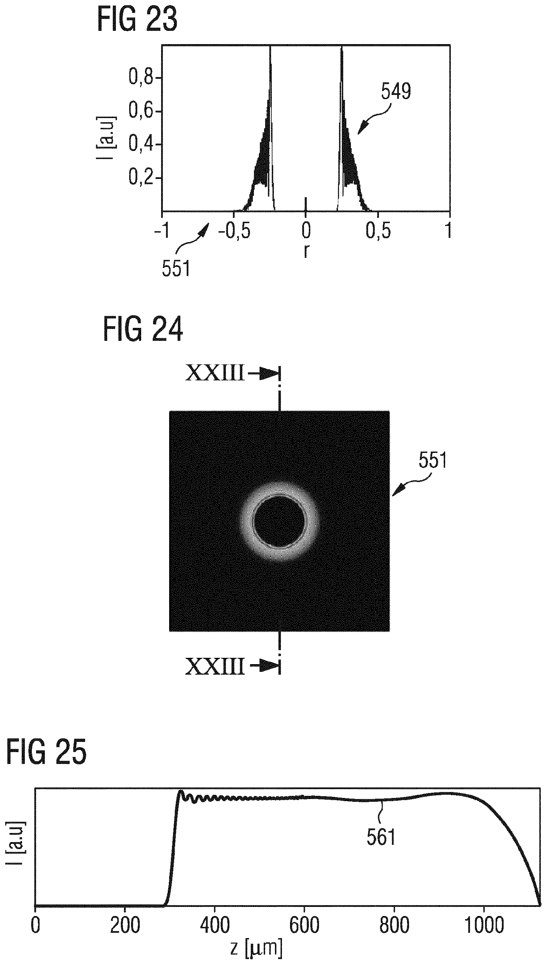

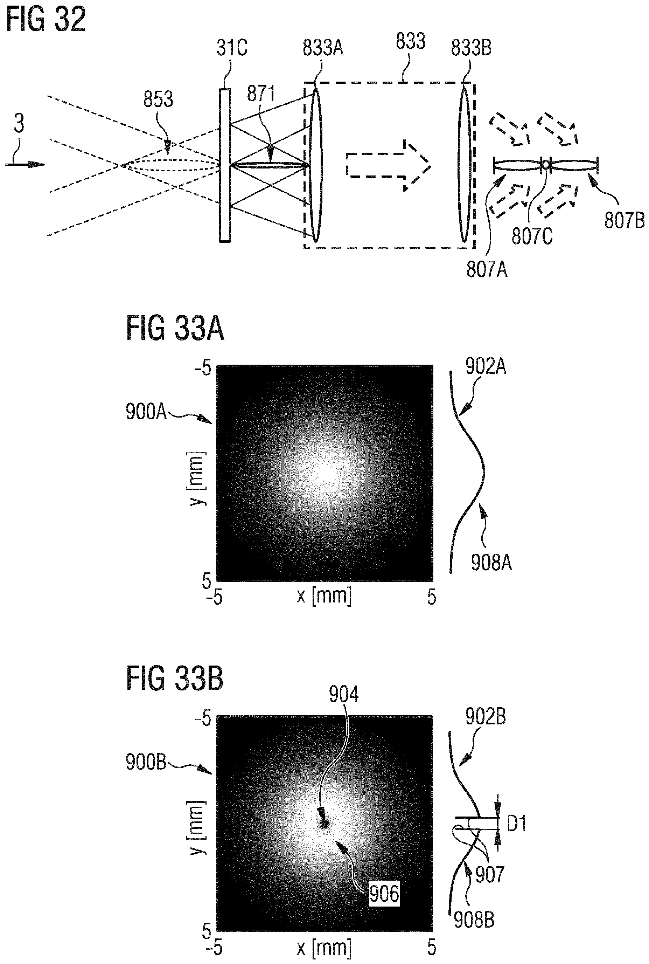

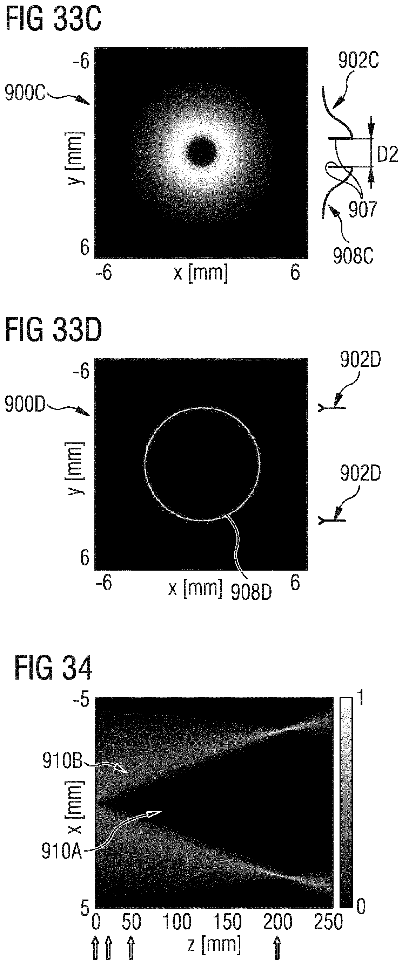

Mit Bezugnahme auf die Figuren 1 bis 8 wird im Folgenden allgemein das zugrunde liegende optische Konzept erläutert. Anschließend werden beispielhafte Ausführungsformen von optischen Systemen erläutert, die zum einen das optische System durch konventionelle Optiken wie Linsen und Spiegel umsetzen (siehe Figuren 9 bis 11B) und zum anderen durch diffraktive optische Elemente umsetzen (siehe Figuren 12 bis 16). In Zusammenhang mit den Figuren 17 bis 22 werden die Kombinierbarkeit des optischen Systems mit Komponenten und Aspekten zur Filterung und zum Scannen sowie allgemein Aspekte des Strahlverlaufs im optischen System erläutert. Abschließend werden in Zusammenhang mit den Figuren 23 bis 32 beispielhafte Ausgestaltungen der langgezogenen Fokuszonen für die Materialbearbeitung dargestellt, die insbesondere mit diffraktiven optischen Elementen verwirklicht werden können. Anhand der Figuren 33A bis 33D und 34 werden Strahlprofile und ein longitudinaler Amplitudenverlauf für einen inversen Quasi-Bessel-Strahl bei der Propagation vom Strahlformungselement zur Nahfeldoptik im optischen System erläutert.

Fig.1 zeigt eine schematische Darstellung eines optischen Systems 1 zur Strahlformung eines Laserstrahls 3 mit dem Ziel, ein in einer Propagationsrichtung 5 langgezogene Fokuszone 7 in einem zu bearbeitenden Material 9 zu erzeugen. Allgemein wird der Laserstrahl 3 durch Strahlparameter wie Wellenlänge, spektrale Breite, zeitliche Pulsform, Ausbildung von Pulsgruppen, Strahldurchmesser, transversales Eingangsintensitätsprofil, transversales Eingangsphasenprofil, Eingangsdivergenz und/oder Polarisation bestimmt. Gemäß Fig. 1 wird der Laserstrahl 3 dem optische System 1 zur Strahlformung, d.h. zum Umwandeln eines oder mehrerer der Strahlparameter, zugeführt. Üblicherweise wird für die Lasermaterialbearbeitung der Laserstrahl 3 angenähert ein kollimierter Gaußscher Strahl mit einem transversalen Gaußschen Intensitätsprofil sein, der von einer Laserstrahlquelle 11, beispielsweise einem Ultrakurzpuls-Hochleistungslasersystem, erzeugt wird. Die Umwandlung kann z.B. in eine inverse Bessel-Strahl-artige oder inverse Airy-Strahl-artige Strahlform erfolgen.

In der in Fig. 2 gezeigten Laserbearbeitungsanlage 21 kann das optische System 1 beispielsweise für die Materialbearbeitung eingesetzt werden. Die Laserbearbeitungsanlage 21 weist ein Trägersystem 23 und eine Werkstücklagerungseinheit 25 auf. Das Trägersystem 23 überspannt die Werkstücklagerungseinheit 25 und trägt das Lasersystem 11, welches in Fig. 2 beispielsweise in einem oberen Querträger 23A des Trägersystems 23 integriert ist. Ferner ist das optische System 1 in X-Richtung verfahrbar am Querträger 23A angebracht, so dass beide Komponenten ortsnah zueinander angeordnet sind. In alternativen Ausführungsformen kann beispielsweise das Lasersystem 11 als eigene externe Einheit vorgesehen werden, dessen Laserstrahl 3 zum optischen System 1 mittels Lichtleitfasern oder als Freistrahl geführt wird.

Die Werkstücklagerungseinheit 25 trägt ein sich in der X-Y-Ebene erstreckendes Werkstück. Das Werkstück ist das zu bearbeitende Material 9, beispielsweise eine Glasscheibe oder eine für die eingesetzte Laserwellenlänge weitgehend transparente Scheibe in keramischer oder kristalliner Ausführung wie beispielsweise Saphir oder Silizium. Die Werkstücklagerungseinheit 25 erlaubt ein Verfahren des Werkstücks in Y-Richtung relativ zum Trägersystem 23, so dass in Kombination mit der Verfahrbarkeit des optischen Systems 1 ein sich in der X-Y-Ebene erstreckender Bearbeitungsbereich zur Verfügung steht.

Gemäß Fig. 2 ist ferner eine Verschiebbarkeit in Z-Richtung z.B. des optischen Systems 1 oder des Querträgers 23A vorgesehen, um den Abstand zum Werkstück einstellen zu können. Für einen in Z-Richtung verlaufenden Schnitt wird der Laserstrahl üblicherweise auch in Z-Richtung (d.h. normal) auf das Werkstück gerichtet. Allerdings können weitere Bearbeitungsachsen bereitgestellt werden, wie es in Fig. 2 beispielhaft durch eine Auslegeranordnung 27 und den zusätzlichen Rotationsachsen 29 angedeutet wird. Entsprechend ist die Auslegeranordnung 27 in der Ausführung gemäß Fig. 2 optional. Ferner können redundante Zusatzachsen für eine höhere Dynamik vorgesehen werden, indem z.B. nicht das Werkstück oder das optische System, sondern kompaktere und entsprechend konzipierte Komponente beschleunigt werden.

Die Laserbearbeitungsanlage 21 weist ferner eine nicht explizit in Fig. 1 gezeigte Steuerung auf, die beispielsweise im Trägersystem 23 integriert ist und insbesondere eine Schnittstelle zur Eingabe von Betriebsparametern durch einen Benutzer aufweist. Allgemein umfasst die Steuerung Elemente zum Ansteuern von elektrischen, mechanischen und optischen Komponenten der Laserbearbeitungsanlage 21, beispielsweise durch Ansteuern entsprechender Betriebsparameter, wie z.B. Pumplaserleistung, Kühlleistung, Richtung und Geschwindigkeit der Laseranlage und/oder der Werkstückhalterung, elektrische Parameter für die Einstellung eines optischen Elements (beispielsweise eines SLM) und die räumliche Ausrichtung eines optischen Elements (beispielsweise zur Drehung desselben).

Weitere Anordnungen für Laserbearbeitungsanlagen mit verschiedensten Freiheitsgraden sind beispielsweise in EP 1 688 807 A1 offenbart. Allgemein wird bei kleinen Werkstücken oft nur das Werkstück bewegt und bei eher großen Werkstücken nur der Laserstrahl oder - wie in Fig. 2 - das Werkstück und der Laserstrahl. Überdies können zwei oder mehrere optische Systeme und damit Fokuszonen von einem Lasersystem 11 versorgt werden.

Die durch Laserbearbeitungsanlagen erzeugten Modifikationen im Material können beispielsweise zum Bohren, zum Trennen durch induzierte Spannungen, zum Schweißen, zur Erzielung einer Modifikation des Brechungsverhaltens oder für selektives Laserätzen eingesetzt werden. Dementsprechend ist es wichtig sowohl die Geometrie als auch die Art der Modifikation geeignet kontrollieren zu können. Neben Parametern wie Laserwellenlänge, zeitliche Pulsform, Anzahl der Pulse, Energie und zeitlicher Abstand der Pulse in einer eine einzelne Modifikation erzeugenden Pulsgruppe sowie Pulsenergie bzw. Pulsgruppenenergie spielt dabei die Strahlform eine entscheidende Rolle.

Insbesondere eine langgezogene Volumenmodifikation erlaubt eine Bearbeitung über einen in Strahlausbreitungsrichtung lang ausgedehnten Volumenbereich in einem einzigen Bearbeitungsschritt. Insbesondere kann an einem Ort in Vorschubrichtung die Bearbeitung über eine große Ausdehnung in nur einem einzigen Modifikationsbearbeitungsschritt stattfinden. Durch den Einsatz der hierin beschriebenen optischen Systeme, Strahlformen und Verfahren können sich einerseits bessere Arbeitsergebnisse (im Vergleich zu an einem Ort in Vorschubrichtung in aufeinanderfolgenden Modifikationsbearbeitungsschritten aneinandergesetzten Einzel-Modifikationen) erzielen lassen, andererseits können die Prozesszeit und die Anforderungen an die Systemtechnik reduziert werden. So fallen für Einzel-Modifikationen mehrere Arbeitsschritte an, die den Zeitaufwand erhöhen und die eine aufwändige Sicherstellung der relativen Lagen der Einzel-Modifikationen zueinander erfordern.

Ferner kann eine langgezogene Fokuszone hilfreich bei der Bearbeitung von unebenen Materialien sein, da im Wesentlichen identische Laserbearbeitungsbedingungen entlang der langgezogenen Fokuszone vorherrschen, so dass in derartigen Ausführungsformen ein entsprechendes Nachführen in Ausbreitungsrichtung nicht oder nur ab eine größeren Abweichung der Position des zu bearbeitenden Materials als der Länge des langgezogenen Fokusbereichs (unter Berücksichtigung der benötigten Bearbeitungs-/Eindringtiefe) notwendig werden kann. Allgemein gilt für die Bearbeitung transparenter Werkstoffe mittels langgezogener Volumenabsorption, dass, sobald eine Absorption stattfindet, diese Absorption selbst oder aber die resultierende Änderung der Materialeigenschaft die Propagation des Laserstrahls beeinflussen kann. Deshalb ist es vorteilhaft, wenn Strahlanteile, die eine Modifikation tiefer im Werkstück, also in Strahlausbreitungsrichtung strahlabwärts, bewirken sollen, im Wesentlichen nicht durch Bereiche nennenswerter Absorption geführt werden.

In anderen Worten ist es also günstig, die zur Modifikation weiter strahlabwärts dienenden Strahlanteile unter einem Winkel der Wechselwirkungszone zuzuführen. Ein Beispiel hierfür ist der Quasi-Bessel-Strahl, bei dem eine ringförmige Fernfeldverteilung vorliegt, deren Ringbreite typischerweise klein im Vergleich zum Radius ist. Die Strahlanteile der Wechselwirkungszone werden dabei im Wesentlichen mit diesem Winkel rotationssymmetrisch zugeführt. Das gleiche gilt für den hierin beschriebenen inversen Quasi-Bessel-Strahl oder für Modifikationen und Ergänzungen desselben wie den homogenisierten oder modulierten inversen Quasi-Bessel-Strahl. Ein weiteres Beispiel ist der inverse beschleunigte "Quasi-Airy-Strahl-artige" Strahl, bei dem die Strahlanteile der Modifikation unter einem Offsetwinkel zugeführt werden, wobei dies anschaulich tangential und - nicht wie beim reinen Quasi-Bessel-Strahl rotationssymmetrisch - an die gekrümmte Modifikationszone erfolgt, z.B. wie bei einem gekrümmten inversen Quasi-Bessel-Strahl.

Weiterhin ist es anzustreben, die Schwelle für die nichtlineare Absorption nur in dem angestrebten Volumenbereich nennenswert zu überschreiten und die Geometrie dieses Volumenbereichs so zu wählen, dass diese einerseits für die gewünschte Anwendung geeignet ist, andererseits aber auch die Propagation zu weiter strahlabwärts liegenden Volumenbereichen nicht wesentlich stört. Beispielsweise mag es vorteilhaft sein, Nebenmaxima eines apodisierten Bessel-Strahlprofils unterhalb einer für die nichtlineare Absorption benötigte Schwellenintensität zu halten.

Mit Blick auf in Vorschubrichtung aufeinanderfolgende Modifikationen kann die Geometrie des modifizierten Volumens ferner so gewählt werden, dass bei einer Aufreihung in Vorschubrichtung mehrerer Modifikationen eine vorher eingebrachte Modifikation nur einen unbedeutenden Einfluss auf die Ausbildung der nachfolgenden Modifikationen hat.

Wie schon angesprochen kann für eine schnelle Bearbeitung die Erzeugung einer einzelnen Modifikation mit nur einem einzelnen Laserpuls/einer einzigen Laserpulsgruppe erfolgen, so dass eine Position am Werkstück in diesem Fall nur einmal angefahren wird.

Ultrakurzpulslaser können die Bereitstellung von Intensitäten (Leistungsdichten) ermöglichen, die es erlauben, eine ausreichend starke Materialmodifikation in entsprechend langen Wechselwirkungszonen zu verursachen. Die geometrische Ausdehnung der Modifikation wird dabei mithilfe der Strahlformung derart festgelegt, dass eine lang ausgedehnte, hohe freie Elektronendichte durch nichtlineare Absorption im Material erzeugt wird. Die Zuführung der Energie in tiefere Bereiche erfolgt lateral, so dass der Abschirmungseffekt durch eine vorgelagerte Wechselwirkung des Plasmas im Vergleich mit einer Gaußschen Fokussierung verhindert wird. Es kann beispielsweise eine in longitudinaler Richtung gleichmäßig ausgedehnte Elektronendichte oder eine räumlich hochfrequent modulierte Elektronendichte erzeugt werden.

Bei entsprechenden Intensitäten kann es in Gebieten mit ausreichend hoher freier Elektronendichte zu einer explosionsartigen Ausdehnung des Materials kommen, wobei die dabei entstehende Schockwelle nanoskopische Löcher (Nanovoids) erzeugen kann. Weitere Beispiele für Modifikationen (Modifikationszonen) sind Brechungsindexänderungen, komprimierte und/oder zugspannungsinduzierende Bereiche, Mikrokristallite und lokale Stöchiometrieänderungen.

Wie eingangs erläutert kann durch die Kumulation derartiger Modifikationszonen in Vorschubrichtung ein Rissverlauf festgelegt werden. Bei der Bearbeitung wird das Werkstück entsprechend entlang einer modifizierten Kontur getrennt. Die Rissbildung kann dann direkt im Anschluss oder durch einen weiteren Prozess induziert erfolgen. Beispielsweise können beim Trennen von nicht vorgespannten Materialien Ultraschall-, bzw. Temperaturrampen verwendet werden, um ein nachträgliches Trennen entlang der modifizierten Kontur zu bewirken. Eine einzelne Modifikation führt üblicherweise nicht zur Rissbildung.

Mithilfe einer maßgeschneiderten Strahlform können unterschiedliche Spannungsverteilungen im Material und zwischen den modifizierten Bereichen erzeugt werden, um den Trennungsprozess an einen gegebenen Werkstoff anzupassen. Starke räumliche und zeitliche Gradienten können dabei die Entstehung einer Mikro- bzw. Nanoexplosion begünstigen.

Die Modifikationsgeometrie wird dabei schwerpunktmäßig durch die Strahlformung bestimmt (und nicht durch nichtlineare Propagation wie beispielsweise der Filamentation). Die Erzeugung räumlicher Gradienten kann durch die hierin beschriebenen optischen Systeme erfolgen, die der zeitlichen Gradienten kann durch Pulszüge oder Pulsformung erzeugt werden.

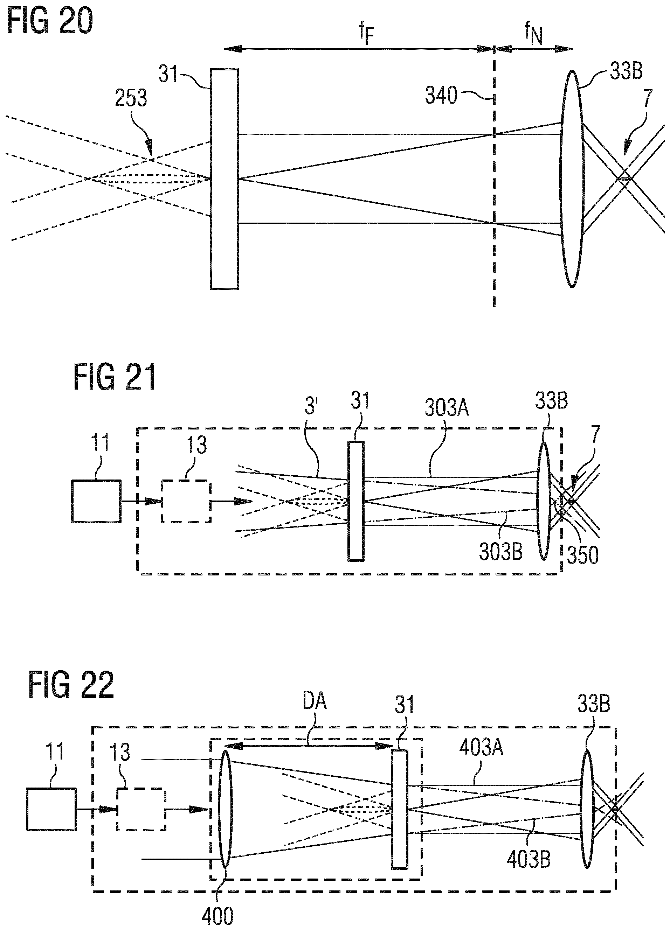

Allgemein kann eine Skalierung der Intensitätsverteilung einer Strahlform durch das Abbildungsverhältnis des Systems, insbesondere durch die Brennweite und die Numerische Apertur der Nahfeldoptik des Abbildungssystems erfolgen. Weitere Möglichkeiten zur Skalierung ergeben sich aus der Verwendung einer zusätzlichen Linse sowie der Verschiebung des Strahlformungselements und/oder der Fernfeldoptik (siehe die Beschreibung in Zusammenhang mit den Figuren 17 und 22). Dadurch kann die laterale und longitudinale Ausdehnung des Strahlprofils im Werkstück beeinflusst werden. Ferner können im Strahlengang zur Strahlformung Raumfilter und Blenden verwendet werden, um den Strahl aufzubereiten.

Beispielhafte Laserstrahlparameter für z.B. Ultrakurzpulslasersysteme und Parameter des optischen Systems und der langgezogenen Fokuszone, die im Rahmen dieser Offenbarung eingesetzt werden können, sind:
Pulsenergie Eₚ: 1 µJ bis 10 mJ (z.B. 20 µJ bis 1000 µJ),
Energie einer Pulsgruppe E_{g}: 1 µJ 10 mJ
Wellenlängenbereiche: IR, VIS, UV (z.B. 2 µm > λ > 200 nm; z.B. 1550nm, 1064 nm, 1030 nm, 515 nm, 343 nm)
Pulsdauer (FWHM): 10 fs bis 50 ns (z.B. 200 fs bis 20 ns)
Einwirkdauer (abhängig von Vorschubgeschwindigkeit): kleiner 100 ns (z.B. 5 ps - 15 ns) Tastverhältnis (Einwirkdauer zur Repetitionszeit des Laserpulses/der Pulsgruppe): kleiner gleich 5 %, z.B. kleiner gleich 1 %
Rohstrahldurchmesser D (1/e²) bei Eintritt in optisches System: z.B. im Bereich von 1 mm bis 25 mm
Brennweite der Nahfeldoptik: 3 mm bis 100 mm (z.B. 10 mm bis 20 mm)
Numerische Apertur NA der Nahfeldoptik: 0.15 ≤ NA ≤ 0.5
Länge des Strahlprofils im Material: größer 20 µm
Maximale laterale Ausdehnung des Strahlprofils im Material, ggf. in der kurzen Richtung: kleiner 20 λ
Aspektverhältnis: größer 20
Modulation in Ausbreitungsrichtung: größer 10 Perioden über Fokuszone
Vorschub dᵥ zwischen zwei benachbarten Modifikationen z.B. für trennende Anwendung: 100 nm < dᵥ < 10 * laterale Ausdehnung in Vorschubrichtung
Vorschub während Einwirkdauer: z.B. kleiner 5 % der lateralen Ausdehnung in Vorschubrichtung

Dabei bezieht sich die Pulsdauer auf einen Laserpuls und die Einwirkdauer auf einen zeitlichen Bereich, in dem z.B. eine Gruppe von Laserpulsen zur Bildung einer einzigen Modifikation an einem Ort mit dem Material wechselwirkt. Dabei ist die Einwirkdauer kurz hinsichtlich der vorliegenden Vorschubgeschwindigkeit, so dass alle Laserpulse eine Gruppe zu einer Modifikation an einem Ort beitragen.

Ist das Werkstück dünner als die Fokuszone lang ist, liegt die Fokuszone partiell außerhalb des Werkstücks, so dass sich Modifikationen ergeben können, die kürzer als die Fokuszone sind. Eine derartige Situation kann vorteilhaft ausgenutzt werden, um den Bearbeitungsprozess auch bei einem Variieren des Abstands zwischen Optik und Werkstück robust zu gestalten. In einigen Ausführungsformen kann eine nicht durch das gesamte Werkstück reichende Modifikation vorteilhaft sein. Insbesondere kann die Länge der Fokuszone und/oder deren Lage im Werkstück angepasst werden. Allgemein sei dabei angemerkt, dass aufgrund unterschiedlicher Schwellen für die nichtlineare Absorption eine Fokuszone mit angenommener identischer Intensität unterschiedlich große Modifikationen in verschiedenen Materialien bewirken wird.

Das Aspektverhältnis betrifft die Geometrie des Strahlprofils (der Fokuszone) im zu bearbeitenden Material sowie die Geometrie der mit einem Strahlprofil erzeugten Modifikation. Bei asymmetrischen oder in lateraler Richtung modulierten (beispielsweise nicht rotationssymmetrischen oder ringförmigen) Strahlprofilen ist das Aspektverhältnis durch das Verhältnis der Länge der Modifikation zu einer innerhalb diesem Längenbereich auftretenden maximalen lateralen Ausdehnung in der kürzesten Richtung bestimmt. Weist das Strahlprofil dabei eine Modulation in lateraler Richtung auf, z.B. bei ringförmigen Strahlprofilen, so bezieht sich das Aspektverhältnis auf die Breite eines Maximums, bei einem ringförmigen Strahlprofil also beispielsweise der Ringstärke. Bei einer Ausbildung mehrerer in lateraler Richtung beabstandeter Modifikationsvolumina bezieht sich das Aspektverhältnis auf die laterale Ausdehnung der einzelnen Modifikation. Bei einem in Ausbreitungsrichtung modulierten Strahlprofil (z.B. aufgrund von Interferenzen) ist das Aspektverhältnis auf die übergeordnete Gesamtlänge bezogen.

Ausgehend von einem Abstand d zwischen Strahlformungselement und Fokussierlinse (Nahfeldoptik), der insbesondere größer ist, als die Brennweite f_{N} der Nahfeldoptik, und einer NA der Nahfeldoptik gegenüber Luft > 0,15, kann das genutzte Winkelspektrum α des Strahlformungselements im Bereich tan(α) < f * NA/d < NA/2, und bevorzugt tan(α) > f * NA/(d * 4), liegen.

Die zuvor genannten Parameterbereiche können die Bearbeitung von Materialdicken bis zu beispielsweise 5 mm und mehr (typisch 100 µm bis 1,1 mm) bei Schnittkantenrauhigkeiten Ra beispielsweise kleiner 1 µm erlauben.

Das optische System 1 kann ferner eine Strahlaufbereitungseinheit 13 zum Anpassen von Strahlparametern wie Strahldurchmesser, Eingangsintensitätsprofil, Eingangsdivergenz und/oder Polarisation des Laserstrahls 3 aufweisen. Beispielsweise wird in das optische System 1 der Laserstrahl eines gepulsten Lasersystems mit beispielsweise einem Strahldurchmesser von 5 mm, Pulslängen von 6 ps bei Wellenlängen um 1030 nm eingekoppelt und zum Strahlformungselement 31 geführt.

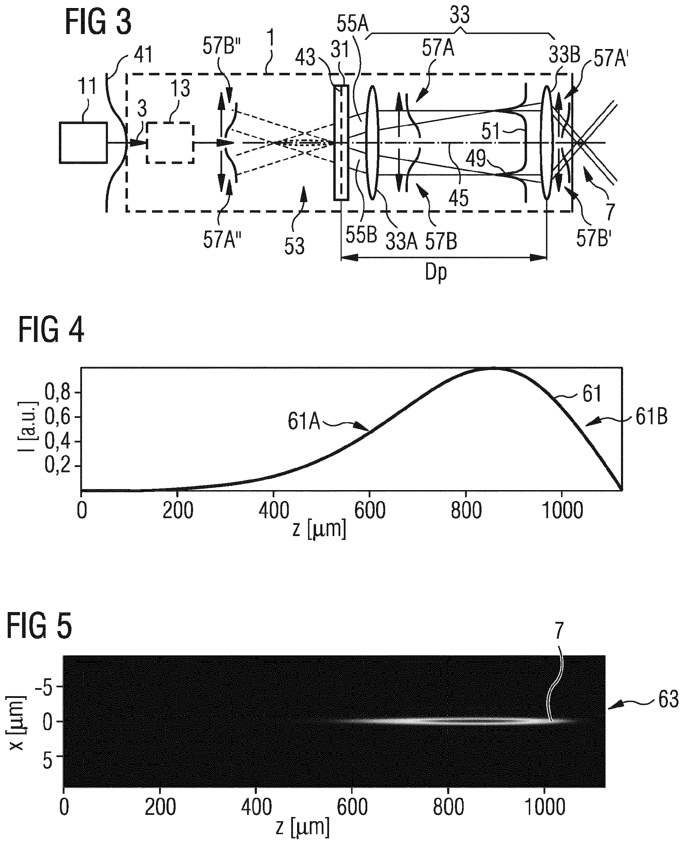

Fig. 3 zeigt den schematischen Aufbau des optischen Systems 1 zur Erläuterung der Funktionsweise. Das optische System 1 basiert auf einem Strahlformungselement 31 und einem Abbildungssystem 33. Das Strahlformungselement 31 ist dazu ausgebildet, den Laserstrahl 3 aufzunehmen. Entsprechend ist es an ein transversales Eingangsintensitätsprofil 41 des Laserstrahls 3 angepasst. Ferner ist das Strahlformungselement 31 dazu ausgebildet, dem Laserstrahl 3 einen strahlformenden Phasenverlauf 43 (gestrichelt schematisch in Fig. 1 angedeutet) über das transversale Eingangsintensitätsprofil 41 aufzuprägen. Der aufgeprägte Phasenverlauf 43 ist derart, dass dem Laserstrahl 3 ein virtuelles, vor dem Strahlformungselement 31 liegendes optisches Bild 53 (im Wesentlichen) der langgezogenen Fokuszone 7 zugeordnet ist. Das Strahlformungselement 31 erzeugt somit ein virtuelles Strahlprofil, das strahl aufwärts des Strahlformungselements 31 liegt, aber nicht dem realen dort vorliegenden Strahlverlauf entspricht.

Das Abbildungssystem 33 ist derart ausgelegt, dass das virtuelle Strahlprofil in den Bereich der Laserbearbeitungsanlage abgebildet wird, in dem das Werkstück während der Bearbeitung positioniert wird. In Fig. 3 weist das Abbildungssystem 33 hierzu beispielhaft ein in Strahlrichtung erstes Fokussierelement, welches hierein als Fernfeldoptik 33A bezeichnet wird, und ein in Strahlrichtung zweites Fokussierelement, welches hierin als Nahfeldoptik 33B bezeichnet wird, auf.

Die Fernfeldoptik 33A ist im Bereich der Phasenaufprägung vorgesehen und in Fig. 3 beispielhaft strahlabwärts des Strahlformungselements 31 mit einer Linsenform verdeutlicht. Wie nachfolgend erläutert wird, kann die Fernfeldoptik 33A auch kurz vor dem Strahlformungselement 31 angeordnet, aus Komponenten vor und nach dem Strahlformungselement zusammengesetzt und/oder ganz oder teilweise in dieses integriert werden.

Nach der Phasenaufprägung im Strahlformungselement 31 propagiert der Laserstrahl 3 gemäß dem Abbildungssystem 33 einen Strahlformungsabstand Dp bis zur Nahfeldoptik 33B. Der Strahlformungsabstand Dp entspricht dabei einer Propagationslänge des Laserstrahls 3, in der der aufgeprägte Phasenverlauf 43 das transversale Eingangsintensitätsprofil 41 in ein transversales Ausgangsintensitätsprofil 51 an der Nahfeldoptik 33B überführt. Hierein umfasst das Ausgangsintensitätsprofil 51 solche transversale Intensitätsprofile im optischen System, die durch die Phasenaufprägung bestimmt sind. Dies ist üblicherweise spätestens im Bereich der Brennweite vor der Nahfeldoptik bzw. im Bereich der Nahfeldoptik erfolgt.

Zur Umsetzung des Konzepts eines virtuellen Strahlprofils ergeben sich für die im optischen System vom Laserstrahl 3 zu durchlaufende Propagationslänge (vom Strahlformungselement 31 bis zur Nahfeldoptik 33B) folgende Überlegungen. Allgemein bildet das optische System ein Abbildungssystem 33 mit einer Fernfeldfokussierwirkung und einer Nahfeldfokussierwirkung aus. Letztere wird durch die Nahfeldoptik 33B und damit durch die Nahfeldbrennweite f_{N} bestimmt. Erstere wird durch eine Fernfeldfokussierwirkung und eine zugehörigen Fernfeldbrennweite f_{F} bestimmt. Die Fernfeldbrennweite f_{F} kann durch die separate Fernfeldoptik 33A realisiert werden und/oder in das Strahlformungselement integriert sein. Siehe dazu auch Fig. 20. Das Abbildungssystem 33 weist ein Abbildungsverhältnis von X zu 1 auf, wobei X für eine Verkleinerung des virtuellen Bildes üblicherweise größer 1 ist. Beispielsweise werden Abbildungsverhältnisse von größer gleich 1:1, z.B. größer gleich 5:1, 10:1, 20:1, 30:1 oder 40:1, umgesetzt. In anderen Worten gibt der Faktor X bei dieser Definition der Abbildung die Vergrößerung der lateralen Größe der Fokuszone ins virtuelle Profil wieder. Der Winkel wird entsprechend verkleinert. Zu beachten ist, dass das Abbildungsverhältnis quadratisch in die Länge des Profils eingeht. Entsprechend verkleinert sich die longitudinale Länge eines virtuellen Bildes beispielsweise für ein Abbildungsverhältnis 10:1 um den Faktor 100 und für ein Abbildungsverhältnis 20:1 um den Faktor 400.

Bei einem Abbildungsverhältnis von 1: 1 gilt f_{N} = f_{F}, eine überlappende Justage der Brennebenen angenommen. Allgemein gilt für f_{F} = X f_{N}. Ist die Fernfeldoptik 33A in das Strahlformungselement integriert, befindet es sich z.B. im Abstand f_{N} + f_{F} von der Nahfeldoptik, d.h. typischerweise im Bereich der Summe der Brennweiten beider Optiken. Für ein 1:1 oder verkleinerndes Abbildungssystem entspricht die Propagationslänge somit mindestens dem Doppelten der Brennweite der Nahfeldoptik.

Separiert man Fernfeldoptik 33A und Strahlformungselement 31 und setzt voraus, dass das virtuelle optische Bild nicht (insbesondere nicht im für die Fokuszone relevanten Intensitätsbereich) mit dem Strahlformungselement überlappen soll, ist das Strahlformungselement mindestens im Abstand I/2 strahlabwärts vom longitudinalen Zentrum des virtuellen Strahlprofils 53 angeordnet. Dabei ist die Länge I das longitudinale Ausmaß des virtuellen Strahlprofils 53 hinsichtlich des relevanten Intensitätsbereichs. Das longitudinalen Zentrum des virtuellen Strahlprofils 53 befindet sich z.B. in der eingangsseitigen Brennebene der Fernfeldoptik 33A, welche sich im Abstand f_{N} + f_{F} von der Nahfeldoptik 33B befindet. In diesem Fall ist die Propagationslänge d = f_{N} + 2f_{F} - I/2 = (1 + 2X) f_{N} - I/2, also kleiner als f_{N} + 2f_{F} = (1 + 2X) f_{N} oder anders ausgedrückt kleiner als der Abstand zwischen den Optiken plus f_{F}.

Für den Abstand d = f_{N} + f_{F} = (1 + X) f_{N} kann auch bei größer werdenden Strahlaufweitungen eine ebenfalls größer werdende Länge I des virtuellen Strahlprofils 53 abgebildet werden, wobei wie hierin später erläutert ein definiertes Ende des Profils beibehalten werden kann.

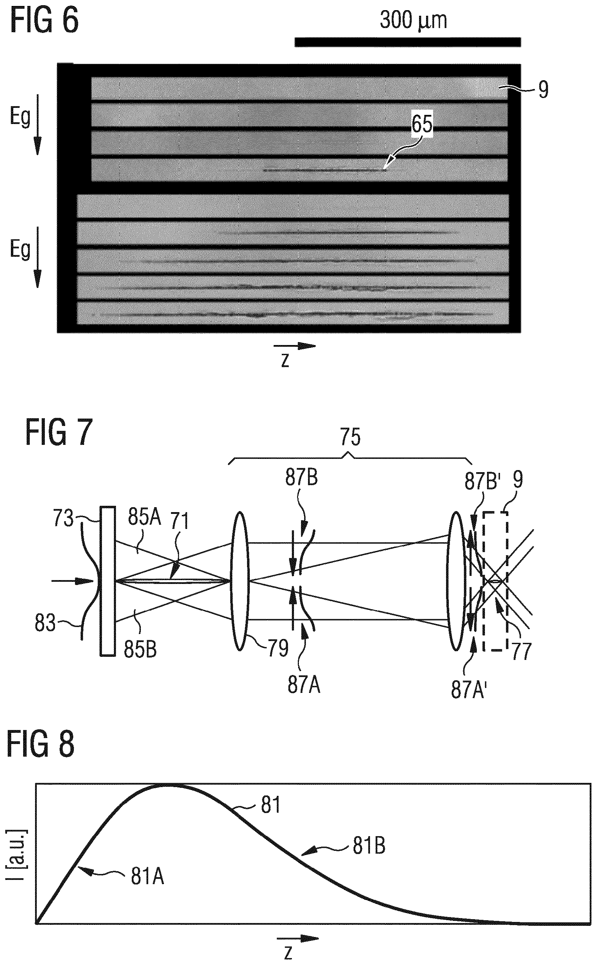

Allgemein sei erwähnt, dass aufgrund von Rohstrahldivergenzen und -konvergenzen sowie bei abweichender Justage des Abbildungssystems Abweichungen von obigen Überlegungen entstehen können. Im Gegensatz zu einer vergleichbaren Abbildung einer realen Intensitätsüberhöhung, d.h. Abbildungen mit vergleichbarem Abbildungsverhältnis, ist das Strahlformungselement näher angeordnet (siehe die entsprechende Diskussion zu den Figuren 7 und 8). Ein üblicher Abstand liegt also in einem Bereich (1 + 2X) f_{N} ≥ d ≥ 2f_{N}.

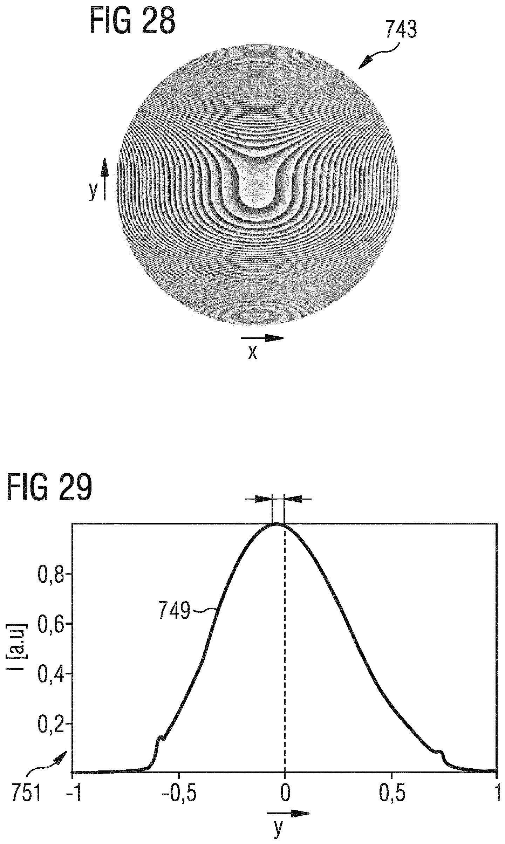

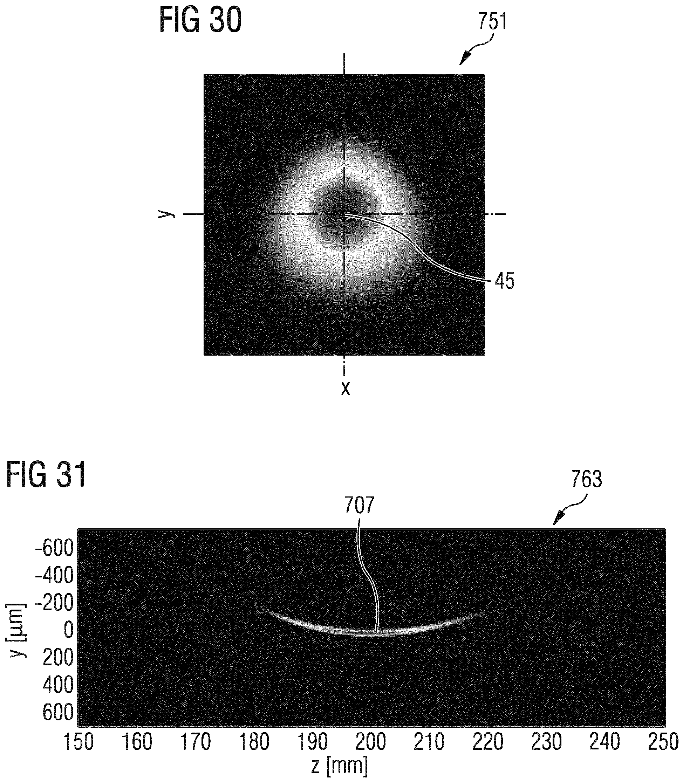

Durch die aufgeprägte Phase weist das transversale Ausgangsintensitätsprofil 51 im Vergleich mit dem Eingangsintensitätsprofil 41 mindestens ein außerhalb einer Strahlachse 45 liegendes lokales Maximum 49 auf. Das außerhalb der Strahlachse 45 liegende lokale Maximum 49 führt zu einem lateralen Energieeintrag in die Fokuszone 7. Je nach Strahlformungselement 31 kann das lokale Maximum 49 des transversalen Ausgangsintensitätsprofils 51 rotationssymmetrisch zur Strahlachse 45 ausgebildet sein - wie in Fig. 3 in der Schnittansicht angedeutet - oder es kann nur in einem azimutalen Winkelbereich ausgebildet sein (siehe z. B. Figuren 29 und 30). Üblicherweise wird die Strahlachse durch den Strahlschwerpunkt des lateralen Strahlprofils definiert. Dem optischen System kann üblicherweise eine optische Achse zugeordnet werden, die üblicherweise durch einen Symmetriepunkt des Strahlformungselements (z.B. durch das Zentrum des DOE oder die Spitze des reflektiven Hohlkegel-Axicon) verläuft. Bei rotationssymmetrischen Strahlen und entsprechend exakter Justage kann die Strahlachse mit der optischen Achse des optischen Systems zumindest abschnittsweise zusammenfallen.

Das lokale Maximum kann als generisches Merkmal des Ausgangsintensitätsprofils 51 betrachtet werden, wobei sich insbesondere für inverse Quasi-Bessel-Strahl-artige Strahlformen eine typische Substruktur mit einer steilen und einer langsam abfallenden Flanke ausbilden kann. Diese Substruktur kann sich aufgrund der fokussierenden Wirkung des Strahlformungselements und/oder der Fernfeldoptik im Bereich einer zugeordneten Fernfeldbrennebene invertieren. Insbesondere kann das Ausgangsintensitätsprofil im Bereich dieser Fernfeldebene das lokale Maximum besonders "scharf" zeigen oder, beispielsweise bei inversen Quasi-Bessel-Strahl-artige Strahlformen, kann sich das lokale Maximum schon sehr schnell nach dem Strahlformungselement ausbilden. Allerdings können die Aspekte der Substruktur aufgrund der vielfältigen Möglichkeiten in der Phasenaufprägung variieren.

Das Konzept eines virtuellen Strahlprofils kann einerseits die Baulänge des optischen Systems 1 reduzieren und andererseits im optischen System 1 die Ausbildung eines langgezogenen Strahlprofils mit deutlicher Intensitätsüberhöhung vermeiden. Das Abbildungssystem 33 ist so ausgestaltet, dass innerhalb des optischen Systems 1 das Fernfeld dieses virtuellen Strahlprofils gebildet wird und dass die Fokussierung in der Nahfeldoptik 33B mittels einer gewöhnlichen Fokussierungskomponente, beispielsweise einer Linse, einem Spiegel, einem Mikroskopobjektiv oder einer Kombination derselben, erfolgen kann. Dabei soll "gewöhnlich" hier in dem Sinne verstanden werden, dass die charakteristische Strahlform im Wesentlichen durch das Strahlformungselement 31 und nicht durch die Nahfeldoptik 33B geprägt wird.

Zur Verdeutlichung wird in Fig. 3 ein Strahlverlauf angedeutet, der einem hierein als inversen Quasi-Bessel-Strahl bezeichneten Strahl entspricht. Dazu ist strahlabwärts des Strahlformungselements 31 der Strahlverlauf mit durchgezogenen Linien verdeutlicht. Strahl aufwärts des Strahlformungselements 31 wird anstelle des einfallenden kollimierten Strahls 3 das virtuelle Strahlprofil in Analogie zu einem realen Quasi-Bessel-Strahl gestrichelt skizziert.

Ähnlich einem üblichen Quasi-Bessel-Strahl weist auch der inverse Quasi-Bessel-Strahl eine Ringstruktur in der Fokusebene der Fernfeldoptik 33A auf. Allerdings gehen die in der schematischen Schnittdarstellung angedeuteten divergenten Strahlbereiche 55A, 55B, die auf die Fernfeldoptik 33A treffen, nicht aus einem "realen" Quasi-Bessel-Strahlprofil hervor, sondern entstehen direkt aus der Wechselwirkung des Strahlformungselements 31 mit dem einfallenden Laserstrahl 3. Aufgrund der direkten Wechselwirkung werden die Strahlbereiche 55A, 55B in ihrer lateralen Intensitätsverteilung durch das transversale Strahlprofil 41 des Laserstrahls 3 geprägt. Entsprechend nimmt bei einem Gaußschen Eingangsstrahl in radialer Richtung die Intensität prinzipiell in den Strahlbereichen 55A, 55B von innen nach außen ab. Aufgrund der Divergenz der Strahlbereiche 55A, 55B bildet sich entsprechend auf der Strahlachse typisch ein Bereich niedrigerer (im idealen Fall keine) Intensität für die phasenmodulierten Strahlanteile aus. Dabei bezieht sich hierin die Divergenz eines Strahlanteils, entsprechend auch ein divergenter Strahlanteil, auf einen Strahlanteil, die sich von der Strahlachse weg bewegt. Allerdings kann sich in diesem Bereich ein Strahlanteil des nicht-phasenmodulierten Strahls und/oder auch ein zusätzlicher phasenmodulierter Strahlanteil überlagern. Hinsichtlich der Entwicklung des Strahls im optischen System während der Ausbildung eines inversen Bessel-Strahl-artigen Strahls wird auf die Beschreibung der Figuren 33 und 34 verwiesen. Dieses Intensitätsverhalten ist schematisch in den transversalen Intensitätsverläufen 57A und 57B angedeutet. Es sei angemerkt, dass sich die Intensitätsverläufe entlang der Propagationslänge aufgrund des aufgeprägten Phasenverlaufs 43 ändern können. Zumindest überwiegt jedoch im Anfangsbereich (d.h. den nahe der Strahlformungseinheit 31 liegenden Strahlenbereichen 55A, 55B) aufgrund des im Wesentlichen als reine Phasenmaske wirkenden Strahlformungselements 31 das einfallende Intensitätsprofil des Laserstrahls 3 für die divergenten phasenmodulierten Strahlanteile.

Zur anschaulichen Erklärung für einen inversen Quasi-Bessel-Strahl werden in Fig. 3 ferner Intensitätsverläufen 57A` und 57B` schematisch angedeutet. Dabei wird angenommen, dass das Strahlformungselement 31 nur die Phase und nicht die Amplitude beeinflusst. Man erkennt, dass die Fokussierung durch die Fernfeldoptik 33A (bzw. die entsprechende Fernfeldwirkung des Strahlformungselements 31) den Intensitätsverlauf am Austritt des optischen Systems 1 umdreht, so dass sich bei der Ausbildung der langgezogenen Fokuszone 7 auf der Strahlachse 45 zuerst niedrige Intensitäten überlagern, welche aus den abfallenden Flanken des einfallenden Gaußschen Strahlprofils hervorgehen. Danach überlagern sich die höheren Intensitäten, welche aus dem zentralen Bereich des einfallenden Gaußschen Strahlprofils hervorgehen. Hierzu sei erwähnt, dass nicht allein die Intensität auf dem Strahlformungselement sondern auch die beitragende Fläche zu berücksichtigen ist. Bei Rotationssymmetrie geht der Abstand entsprechend quadratisch ein. Wie insbesondere in Zusammenhang mit Fig. 4 erläutert endet das longitudinale Intensitätsprofil genau in dem Bereich, in dem sich die Strahlanteile aus dem Zentrum des Eingangsprofils schneiden. Im Zentrum liegt zwar die höchste Intensität vor, die Fläche geht aber gegen Null. Ferner sei angemerkt, dass nach der Fokuszone wiederrum ein umgedrehter Intensitätsverlauf vorliegt, der dem Intensitätsverlauf 57A, 57B nach dem Stahlformungselement entspricht (keine Wechselwirkung mit einem Material angenommen).

Aufgrund der Abbildung durch das Abbildungssystem 33 liegen entsprechend hinsichtlich der virtuellen Strahlform in Fig. 3 schematisch angedeutete einlaufenden virtuelle Intensitätsverläufen 57A" und 57B" vor, die im Prinzip den Intensitätsverläufen 57A` und 57B` entsprechen.

Diese im Vergleich zum Quasi-Bessel-Strahl umgekehrte Intensitätsverläufe bewirkt einen speziellen longitudinalen Intensitätsverlauf für den inversen Quasi-Bessel-Strahl sowohl in der Fokuszone 7 als auch im virtuellen Strahlprofil, d.h. dem optischen Bild 53, da hier die Überlagerung der Strahlbereiche 55A, 55B virtuell erfolgt. Für die entsprechende Diskussion des Intensitätsverlaufs für einen konventionellen Quasi-Bessel-Strahl wird auf die Figuren 7 und 8 und die zugehörige Beschreibung verwiesen.

Fig. 4 verdeutlicht beispielhaft eine longitudinale Intensitätsverteilung 61 in der langgezogenen Fokuszone 7, wie sie für die Abbildung des virtuellen optischen Bildes 53 einer inversen Quasi-Bessel-Strahlform berechnet werden kann. Aufgetragen ist eine normierte Intensität I in Z-Richtung. Es sei angemerkt, dass eine Ausbreitungsrichtung gemäß eines normalen Einfalls (in Z-Richtung) auf das Material 9 nicht zwingend ist und, wie in Zusammenhang mit Fig. 2 erläutert, alternativ unter einem Winkel zur Z-Richtung erfolgen kann.

Man erkennt in Fig. 4 einen zuerst langsamen Intensitätsanstieg 61A über mehrere 100 Mikrometer (anfängliche Überlagerung der niedrigen (äußeren) Intensitäten) bis zu einem Intensitätsmaximum, gefolgt von einem starken Intensitätsabfall 61B (Überlagerung der hohen (zentralen) Intensitäten). Für eine inverse Bessel-Strahlform ergibt sich somit in Ausbreitungsrichtung (Z-Richtung in Fig. 4) eine harte Grenze der longitudinalen Intensitätsverteilung. Wie man insbesondere mit Blick auf die in Fig. 3 dargestellten Intensitätsverläufe 57A` und 57B` erkennen kann, basiert diese harte Grenze darauf, dass das Ende der longitudinalen Intensitätsverteilung 61 auf die Beiträge des Strahlzentrums des einfallenden Laserstrahls mit zwar viel Intensität aber auf einer stark reduzierten (auf Null gehende) Fläche zurückgeht. In anderen Worten, das Ende beruht auf der Abbildung eines virtuellen Strahlprofils, in dem in der Mitte für den inversen Quasi-Bessel-Strahl ein Loch entsteht. Der starke Gradient beim Intensitätsabfall am Ende beruht auf der hohen Intensität im Zentrum des Eingangsprofils, begrenzt allerdings durch die verschwindende Fläche. Für ein ideales Abbildungssystem ist das longitudinale Ausmaß der Intensitätsverteilung 61 durch die Lage des virtuellen Profils und den Abbildungsmaßstab definiert. Weist das Werkstück ferner einen höheren Brechungsindex auf, so wird das Strahlprofil entsprechend verlängert.

Hierzu sei ergänzt, dass die harte Grenze in Laserbearbeitungsanlagen zur Folge hat, dass das in Ausbreitungsrichtung vordere Ende einer Modifikation auch bei Vergrößerung des einfallenden transversalen Strahlprofils im Wesentlichen stationär in Ausbreitungsrichtung ist. Die Modifikation ändert ihre Ausdehnung nur im hinteren Bereich, d.h. sie kann sich in Richtung zur Nahfeldoptik hin verlängern, wenn der Eingangsstrahldurchmesser des Laserstrahls größer wird. Eine einmal eingestellte Lage der harten Grenze bezüglich der Werkstückauflage bzw. dem Werkstück selbst kann somit hohe Intensitäten im strahlabwärts der Modifikation vermeiden. Im Unterschied dazu führt eine Vergrößerung des Eingangsstrahldurchmessers bei der Abbildung einer realen Intensitätsüberhöhung zu einer Verlängerung der Modifikation in Ausbreitungsrichtung, d.h. z.B. in eine Werkstückauflage hinein, was zu Beschädigungen derselben führen kann.

Fig. 5 zeigt einen beispielhafter X-Z-Schnitt 63 der Intensität in der Fokuszone 7 für die in Fig. 4 gezeigte longitudinale Intensitätsverteilung 61. Es wird angemerkt, dass hierin z.T. Graustufendarstellungen wie die der Figuren 5, 30 und 31 auf einer Farbdarstellung basieren, so dass Maximalwerte der Intensität/Amplitude dunkel dargestellt werden können. Beispielsweise ist das Zentrum der Fokuszone 7 (höchste Intensität) in Fig. 5 dunkel dargestellt und von einem helleren Bereich niedrigerer Intensität umgeben. Ähnliches gilt für die Fokuszone 707 in den Figuren 30 und 31. Man erkennt die langgezogene Ausbildung der Fokuszone 7 über mehrere 100 Mikrometer bei einer transversalen Ausdehnung von einigen wenigen Mikrometer. Mit dem Schwellenwertverhalten der nichtlinearen Absorption kann ein derartiges Strahlprofil im Werkstück eine klar definierte langgezogene Modifikation bewirken. Die langgezogene Form der Fokuszone 7 weist beispielsweise ein Aspektverhältnis, d.h. ein Verhältnis der Länge der Fokuszone zu einer innerhalb dieser Länge auftretenden maximalen Ausdehnung in der lateral kürzesten Richtung - letzteres bei nicht rotationssymmetrischem Profilen) im Bereich von 10:1 bis 1000:1, z.B. 20:1 oder mehr, beispielsweise 50:1 bis 400:1 auf.

Wenn man sich von der in Fig. 4 dargestellten Strahlform eines Amplituden-seitig in Ausbreitungsrichtung nicht modifizierten inversen Quasi-Bessel-Strahl löst, kann mit dem Strahlformungselement 31 im Fernfeld zusätzlich eine Amplitudenumverteilung bewirkt werden, die z.B. zu einer Intensitätsmodifizierung in Ausbreitungsrichtung genutzt werden kann. Allerdings kann die sich dabei ergebende Intensitätsverteilungen vor der Fokuszone 7 die "Umkehrung" nicht mehr in einer sehr offensichtlichen Form widergeben. Nichtsdestotrotz werden sich doch oft im Anfangsbereich und im Endbereich des longitudinalen Intensitätsprofils Ansätze der Invertierung zeigen, z.B. ein langsamer Anstieg und ein schneller Abfall. Überdies kann eine (phasenbedingte) Amplitudenumverteilung durch den Phasenverlauf des Strahlformungselements 31 eben genau auf eine invertierte Intensitätsverteilung eingestellt werden, um beispielsweise eine Art longitudinale Flat-top-Intensitätsprofil zu bewirken.

Ergänzend kann folgendes Merkmal zur Abgrenzung hinsichtlich einer "realen" Strahlform erhalten bleiben: Im Falle eines realen Gaußschen Eingangsstrahl existiert z.B. bei einem realen Axicon eine Ebene zwischen Nahfeldoptik und Fokuszone, in der das verkleinerte Gaußsche transversale Strahlprofil des Eingangsstrahls vorliegt und entsprechend sichtbar gemacht werden kann. Eine entsprechende Abbildung gibt es beim Konzept eines virtuellen optischen Bildes. Allerdings liegt in diesem Fall die Bildebene, in der das verkleinerte Gaußsche transversale Strahlprofil vorliegt, hinter der Fokuszone. Das transversale Strahlprofil kann entsprechend sichtbar gemacht werden. Dies gilt allgemein für Phasenmasken für die hierin vorgestellten inversen Strahlformen, wenn diese mit einem Gaußschen Strahlprofil beleuchtet werden. Im Speziellen liegt das verkleinerte Gaußsche transversale Strahlprofil in der Bildebene des Strahlformungselements und somit üblicherweise direkt strahlabwärts der Fokuszone. Aufgrund der schon erfolgten Divergenz ist es deswegen deutlich größer als das transversale Strahlprofil des inversen Quasi-Bessel-Strahl-artigen Strahls in der Fokuszone. Ebenso ist es in der Intensität viel geringer.

Man kann die Position des abgebildeten Gaußschen transversalen Strahlprofils der Eingangsstrahls an einem schnellen Umschlagen der Struktur des Strahlprofils, d.h. einer starken Änderung über einen kleinen lateralen Bereich, erkennen. So liegt in der Fokuszone z.B. das transversale Intensitätsprofil des inversen Quasi-Bessel-Strahl-artigen Strahls vor. Bei Durchgang durch die Bildebene des Strahlformungselements bildet sich dann "quasi" sofort der dunkle Punkt im Zentrum aus. Dies ist bei einem inversen Quasi-Bessel-Strahl anders am Anfang der Fokuszone. Dort bildet sich aufgrund der zunehmenden Überlagerung der Randbereiche des Gaußschen Strahlprofils ein langsamer Übergang von einem dunklen Zentrum zum im Zentrum ausgefüllten transversalen Intensitätsprofil des inversen Quasi-Bessel-Strahl-artigen Strahls aus. In anderen Worten in longitudinaler Richtung nimmt die Intensität über einen größeren Bereich zu, als sie am Ende abnimmt. Am Ende ist der Übergang entsprechend klar scharf begrenzt. Es sei ergänzt, dass für die Abbildung einer realen Bessel-Strahl-artige Intensitätsüberhöhungen sich das Verhalten am Ende und am Anfang vertauschen, d.h. am Ende des Bessel-Strahlprofils bildet sich der dunkle Punkt langsamer aus.

Wie zuvor erläutert wirkt sich das Konzept der Verwendung eines virtuellen Strahlprofils somit u.a. auf die vorzunehmende Phasenaufprägung und die sich ergebenden Intensitätsverläufe im Fokusbereich 7 aus.

Fig. 6 verdeutlicht Modifikationszonen 65, die im Rahmen einer experimentellen Studie zur Untersuchung der Ausbildung von Modifikationen in einem Material erzeugt wurden. Jede Modifikationszone 65 geht auf die Wechselwirkung mit einer Gruppe von Laserpulsen, beispielsweise zwei 6 ps Pulsen mit einem Abstand von ca. 14 ns, zurück. Die Form der Modifikationszonen korrespondiert mit der Form der gemäß den Figuren 4 und 5 angenommenen langgezogenen Fokuszone 7. Die maximale Länge ist durch die Geometrie der langgezogenen Fokuszone 7 bei einer benötigten Intensität/Fluenz begrenzt.

Die oberen vier Aufnahmen verdeutlichen das Schwellenwertverhalten bei Pulsgruppenenergien Eg von ca. 20 µJ bis 40 µJ. Die unteren vier Aufnahmen verdeutlichen die Formgebung der langgezogenen Modifikationszonen 65 bei Pulsgruppenenergien Eg von ca. 30 µJ bis 200 µJ. Bei zunehmender Gesamtenergie Eg verlängert sich die Modifikationszone in Richtung Strahleintritt (Nahfeldoptik), da die Schwellenintensität zur nichtlinearen Absorption in einem längeren Bereich der Fokuszone 7 erreicht wird. Das Ende der Modifikation in Strahlausbreitungsrichtung ist in seiner Lage im Wesentlichen stationär, und zwar insbesondere ohne Nachkorrektur eines Abstands einer Nahfeldoptik (33B) zum zu bearbeitenden Werkstück. Bei geringen Energien mag aufgrund des bestehenden Gradienten in longitudinaler Richtung ein anfängliches in Strahlrichtung Wandern des hinteren Endes eintreten, insbesondere wenn die Modifikationsschwelle bei kleineren Intensitäten im Strahlprofil liegt. Allerdings nimmt dieses Wandern bei mittleren und hohen Energien ab, da die Erzeugung des inversen Quasi-Bessel-Strahl-artigen Strahlprofils in Ausbreitungsrichtung in implizites maximales hinteres Ende aufweist.

Ein ähnliches Verhalten in der Veränderung des longitudinalen Ausmaßes der Modifikation ergibt sich auch für einen radial zunehmenden Strahldurchmesser des einfallenden Laserstrahls 3. Auch in diesem Fall verlängert sich die Modifikationszone in Richtung Strahleintritt (Nahfeldoptik), da die radial außen hinzukommenden Intensitätsbereiche des einfallenden Laserstrahls 3 Energie in den longitudinalen Intensitätsbereich im Bereich des langsamen Intensitätsanstiegs 61A (d.h. Intensitätsanstieg mit geringer Steigung) führen. Das Maximum der Intensitätsverteilung wird sich entsprechend in Richtung Strahleintritt verschieben. Das Ende der Modifikation in Strahlausbreitungsrichtung ist dagegen in seiner Lage im Wesentlichen stationär, da diese Lage durch die Strahlmitte des einfallenden Laserstrahls 3 mit Energie versorgt wird. Hierzu sei erwähnt, dass auch bei modifizierten inversen Quasi-Bessel-Strahl-artigen Strahlformen dieses Verhalten beobachtet werden kann. Beispielsweise für eine in Zusammenhang mit den Figuren 23 bis 26 diskutierten Flat-top-Strahlform würde sich bei Änderung des Strahldurchmessers die Lage des Endes der Modifikation im Wesentlichen nicht ändern. Für ein derart verändertes einfallendes Intensitätsprofil kann das Strahlformungselement ferner evtl. nicht mehr zu einer optimierten Flat-top-Struktur führen, so dass sich Modulationen in der Intensität und evtl. eine Variation des Anfangs ergeben können.

Fig. 7 dient der Erläuterung einer Strahlführung, bei der eine reale Intensitätsüberhöhung 71 durch eine Strahlformungsoptik 73, wie ein Axicon, erzeugt wird. Dies entspricht der bekannten Ausbildung eines Quasi-Bessel-Strahls. Die Intensitätsüberhöhung 71 wird anschließend über ein Teleskopsystem 75 in das Werkstück 9 unter Ausbildung einer Fokuszone 77 abgebildet. Wie in Fig. 7 dargestellt besteht in einem derartigen Aufbau die Gefahr, dass die reale Intensitätsüberhöhung 71 eine Fernfeldoptik 79 des Teleskopsystems 75 beschädigt, insbesondere wenn eine geringe Baulänge realisiert werden soll. Das hierin beschriebene optische System (siehe z.B. Fig. 3), das das Konzept eines virtuellen Bildes umsetzt, umgeht dieses Risiko einer Beschädigung der strahlführenden Optik.

Fig. 8 verdeutlicht zur Vollständigkeit eine sich bei dem Aufbau gemäß Fig. 7 ergebende longitudinale Intensitätsverteilung 81 in Z-Richtung. Nach einem von Anfang an starken Anstieg 81A wird ein Intensitätsmaximum erreicht, ab dem die Intensität wieder abfällt. Bei niedrigen Intensitäten setzt ein langsam auslaufender Abfall 81B (auslaufender Abfall geringer Steigung) ein. Man erkennt die prinzipielle Umkehrung der longitudinalen Intensitätsverteilungen 61 und 81 der Figuren 4 und 8, bei der die "harte Grenze) am Ende durch einen "harten Anfang" ersetzt wird.

Für einen derartigen Quasi-Bessel-Strahl wird das Durchstrahlen eines Axicon mit einem Laserstrahl mit einem einfallenden Gaußschen Strahlprofil 83 zu sich überlagernden Strahlbereiche 85A, 85B führen, deren Intensitätsgewichtung zur realen longitudinalen Intensitätsverteilung 81 führt (zuerst Überlagerung der Intensitäten des Zentralbereichs des Gaußschen Strahlprofils 83, danach Überlagerung der niedrigen (äußeren) Intensitäten des Gaußschen Strahlprofils 83). Zur Erläuterung sind wiederum schematisch Intensitätsverläufe 87A und 87B strahlabwärts der Fernfeldoptik 79 und Intensitätsverläufe 87A` und 87B` strahl aufwärts der Fokuszone 77 angedeutet.

Im Folgenden werden verschiedene beispielhafte Konfigurationen von optischen Systemen erläutert, die das Konzept der virtuellen Intensitätsüberhöhung umsetzen. Sie umfassen Strahlformungselemente in Transmission oder Reflexion, wobei die Aufprägung des Phasenverlaufs insbesondere refraktiv, reflektiv oder diffraktiv erfolgt. Für bereits beschriebene Komponenten wie das Lasersystem 11 wird auf die vorausgehende Beschreibung verwiesen.

Mit Blick zu den Abständen der Strahlformungsoptik 73 von der Nahfeldoptik können ähnlich den Überlegungen für das virtuelle Bild folgende Werte angenommen werden. Bei einem realen Strahlprofil würde man typisch die Mitte des abzubildenden realen Strahlprofils der Länge I in die eingangsseitige Brennweite der Fernfeldoptik legen. Ein typischer Abstand wäre dann mindestens f_{N} + 2f_{F} + I/2 = (1 + 2X) f_{N} + I/2, also größer als f_{N} + 2fr, oder, anders ausgedrückt, größer als der Abstand zwischen den Optiken plus f_{F}.

Fig. 9 zeigt eine refraktive Strahlformung mithilfe eines Hohlkegel-Axicons 131A. Dieses erzeugt ein virtuelles inverses Quasi-Bessel-Strahlprofil 153A strahl aufwärts des Hohlkegel-Axicons 131A. Dieses wird in Fig. 9 durch gestrichelte Linien angedeutet, eine reale Intensitätsüberhöhung liegt in diesem Bereich nicht vor. Ferner ist in der Ausführung gemäß Fig. 9 die Fernfeldoptik in Strahlausbreitungsrichtung strahlabwärts des Hohlkegel-Axicons 131A als Plankonvexlinse 133A ausgeführt. Die Nahfeldoptik 33B bewirkt die Fokussierung des Laserstrahls in die Fokuszone 7, so dass dem Laserstrahl das virtuelle inverse Quasi-Bessel-Strahlprofil 153A als virtuelles optisches Bild der Fokuszone 7 zugeordnet ist.

Fig. 10 zeigt eine Ausführungsform mit einem Hohlkegel-Axicon-Linse-System 131B, das als refraktives Strahlformungselement verwendet wird. Dabei ist die Fernfeldoptik in das Strahlformungselement als konvexe Linsenfläche 133B integriert, die auf der Eingangsseite des Hohlkegel-Axicons angeordnet ist. Dieser Aufbau erzeugt ebenfalls ein virtuelles inverses Quasi-Bessel-Strahlprofil 153B.

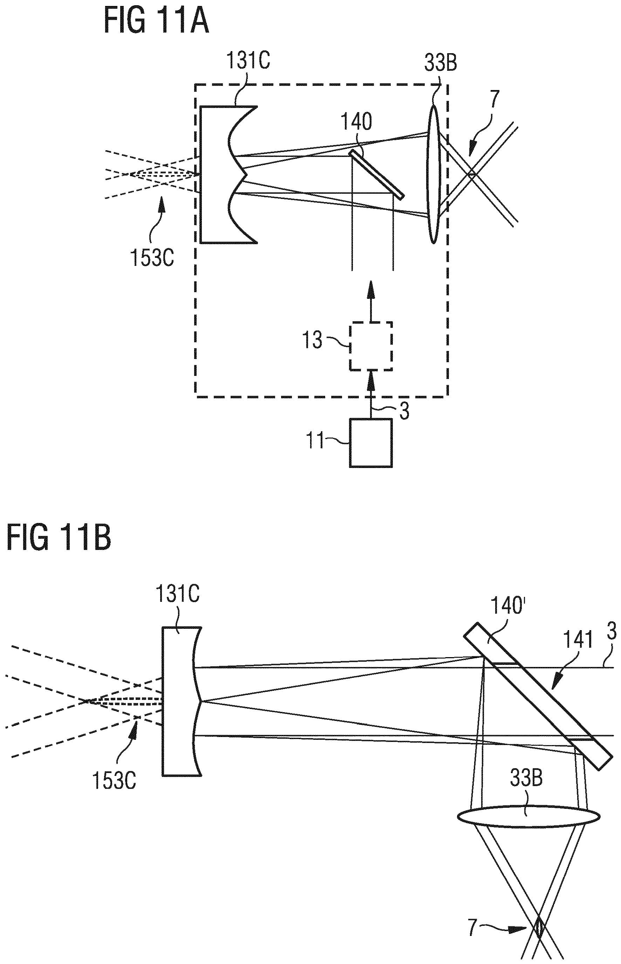

Fig. 11A verdeutlicht eine Ausführungsform mit einem reflektiven Strahlformungselement, insbesondere einem reflektiven Axicon-Spiegel-System 131C. Eine hochreflektive Oberfläche des Strahlformungselements ist derart geformt, dass die strahlformende Eigenschaft eines reflektiven Axicons mit der fernfeldbildenden Komponente eines fokussierenden Hohlspiegels kombiniert ist. Entsprechend erfüllt das Axicon-Spiegel-System 131C sowohl die Funktionen der Strahlformung als auch die der Fernfeldoptik. Ein virtuelles inverses Quasi-Bessel-Strahlprofil 153C ist rückseitig des Axicon-Spiegel-Systems 131C angedeutet, also in einem Bereich, der nicht vom Laserstrahl 3 durchlaufen wird.

Wie in Fig. 11A ferner gezeigt wird der Laserstrahl 3 des Lasersystems 11 nach der Strahlanpassungseinheit 13 in das optische System 1 durch einen Umlenkspiegel 140 eingekoppelt. Der Umlenkspiegel 140 ist beispielsweise auf der optischen Achse zwischen dem Axicon-Spiegel-System 131C und der Nahfeldoptik 33B angeordnet und lenkt den Strahl auf das Strahlformungselement 131C. In einigen Ausführungsformen kann der Umlenkspiegel beispielsweise zentral durchbohrt sein, um möglichst wenig Licht auf den optisch eventuell mit Fehlern behafteten zentralen Bereich des Strahlformungselements 131C zu lenken. Ergänzend zu den nachfolgend in Zusammenhang mit den Figuren 17 und 18 beschriebenen Aspekt der Filterung sei schon hier vermerkt, dass der Umlenkspiegel 140 zugleich einen nicht erwünschten zentralen Strahlanteil blockt, so dass dieser nicht durch die Nahfeldoptik 33B fokussiert wird.

Fig. 11B zeigt eine weitere Ausführungsform eines auf einem reflektiven Strahlformungselement basierenden optischen Systems. Das Strahlformungselement in Form des reflektiven Axicon-Spiegel-System 131C wird dabei durch eine Öffnung 141 eines durchbohrten Umlenkspiegel 140' mit dem Laserstrahl 3 beleuchtet. Der reflektierte und phasenaufgeprägte Strahl trifft dann nach Ausbildung eines z.B. ringförmigen Fernfeldes auf den Umlenkspiegel 140'. Diese lenkt den Strahl auf die Nahfeldoptik 33B zur Fokussierung in die langgezogene Fokuszone um. Die Öffnung dient somit ferner als eine Art Filter/Blende des zentralen Bereichs des reflektierten Strahls.

In einer weiteren Ausführungsform mit einem reflektiven Strahlformungselement weist das optische System ein reflektives Axicon, einen durchbohrten Off-Axis-Parabolspiegel und die Nahfeldoptik auf. Das reflektive Axicon weist zur Strahlformung einen konisch geschliffenen Grundkörper auf, dessen konische Oberfläche hochreflektiv beschichtet ist. Der Laserstrahl kann durch die Öffnung im Off-Axis-Parabolspiegel auf das reflektive Axicon eingestrahlt werden. Der reflektierte und strahlgeformte Strahl trifft dann auf den Off Axis-Parabolspiegel, der ihn auf die Nahfeldoptik 33B umlenkt und gleichzeitig kollimiert.

Die Figuren 12 und 13 zeigen Ausführungsformen des optischen Systems mit digitalisierten Strahlformungselementen. Die Digitalisierung kann dabei die Verwendung von diskreten Werten für die Phasenschiebung und/oder die laterale Struktur (beispielsweise Pixelstruktur) betreffen. Die Nutzung von räumlichen Lichtmodulatoren (SLMs) ist eine von mehreren verschiedenen Möglichkeiten, die Strahlformung über programmierbare oder auch fest eingeschriebene diffraktive optische Elemente (DOE) umzusetzen.

Diffraktive optische Elemente erlauben neben der leichten Erzeugung eines oder mehrerer virtueller Strahlprofile, z.B. entsprechend der Phasenaufprägung eines oder mehrerer Hohlkegel-Axicon, die gezielte Modifikation beispielsweise zur Homogenisierung der longitudinalen Intensitätsverteilung. Dabei können beispielsweise Abweichungen in der Phase im Bereich kleiner gleich 50%, z.B. von kleiner gleich 20 % oder von kleiner gleich 10 % bzgl. beispielsweise der Hohlkegel-Axicon-Phase (und damit von einem inversen Quasi-Bessel-Strahl) eingesetzt werden. Allgemein erlauben SLMs sehr feine Phasenänderungen bei einer lateral gröberen Auflösung, im Gegensatz zu beispielsweise lithographisch hergestellten, fest eingeschriebenen DOEs. Fest eingeschriebene DOEs weisen z.B. planparallele Stufen auf, deren Dicke die Phase bestimmt. Dabei erlaubt die lithographische Herstellung eine hohe laterale Auflösung. Binäre Stufen können reale und virtuelle Strahlprofile hervorrufen. Erst eine Anzahl von mehr als zwei Phasenhüben kann eine Differenzierung im Sinne einer Vorzugsrichtung für das virtuelle Strahlprofil hervorrufen. So können vier oder acht oder mehr Phasenhübe eine effiziente Strahlformung bzgl. des virtuellen Strahlprofils erlauben. Allerdings kann die Diskretisierung Nebenordnungen bewirken, die beispielsweise herausgefiltert werden können. Allgemein können mehrere optische Elemente in einem DOE zusammengefasst werden, indem z.B die Transmissionsfunktion aller Elemente bestimmt wird (z.B. Hohlkegel-Axicon(s) und Linse(n); Addieren der einzelnen Phasenfunktionen (exp(-1i (phi1+phi2+...)). Zusätzlich oder alternative kann eine Art Superposition der einzelnen Transmissionsfunktionen erfolgen. Zur Bestimmung von Phasenverläufen wurde eingangs auf die Veröffentlichung von Leach et al. verwiesen. Herstellungsverfahren für kontinuierliche Mikrostrukturen umfassen beispielsweise die Analog-Lithographie oder die Nanoimprint-Lithographie.

Hierin wird das strukturelle, die Phasenaufprägung bewirkende und flächig ausgebildete Element eines diffraktiven optischen Strahlformungselements, sei es ein einstellbarer SLM oder ein fest eingeschriebenes DOE, als Phasenmaske bezeichnet. Je nach Ausführung des DOE kann es in Transmission oder in Reflexion verwendet werden, um einem Laserstrahl einen Phasenverlauf aufzuprägen.

In Fig. 12 wird ein räumlicher Lichtmodulator 31A in Reflexion zur Phasenaufprägung eingesetzt. Beispielsweise basiert der räumliche Lichtmodulator 31A auf einem "liquid crystal on silicon" (LCOS), der eine für die einzelnen Pixel programmierbare Phasenverschiebung ermöglicht. Räumliche Lichtmodulatoren können ferner auf Microsystemen (MEMS), Micro-Opto-Electro-Mechanischen Systemen (MOEMS) oder Microspiegel-Matrix-Systemen basieren. In SLMs können die Pixel beispielsweise elektronisch angesteuert werden, um eine spezielle Phasenausprägung über das transversale Eingangsintensitätsprofil zu bewirken. Die elektronische Ansteuerbarkeit ermöglicht zum Beispiel das online-Einstellen von Phasen und damit das Anpassen der Fokuszone 7, z.B. in Abhängigkeit des zu bearbeitenden Materials oder in Reaktion auf Schwankungen des Lasers. In der Anordnung gemäß Fig. 12 kann beispielsweise die Funktion eines diffraktiven Axicons zur Erzeugung eines virtuellen inversen Quasi-Bessel-Strahlprofils mit der fernfeldbildenden Wirkung einer Fernfeldoptik durch die Phasenschiebung des räumlichen Lichtmodulators 31A kombiniert werden. Alternativ kann als strahlformendes Element 31A ein fest eingeschriebenes reflektives DOE eingesetzt werden.

Fig. 13 ist eine schematische Darstellung eines auf einem DOE 31B basierenden optischen Systems, bei dem die Phasenaufprägung fest in das DOE 31B eingeschrieben ist. Das DOE 31B wird in diesem Fall in Transmission verwendet. Wie in Fig. 12 ist sowohl die Phasenschiebung, die beispielsweise zu einem virtuellen Quasi-Bessel-Strahlprofil führt, als auch die fokussierende Eigenschaft der Fernfeldoptik im DOE 31B zusammengefasst.

Die optischen Systeme der Figuren 9 bis 13 können zu Ausgangsintensitätsprofilen führen, die inversen Quasi-Bessel-Strahlprofilen entsprechen und denen virtuelle optische Bilder zugeordnet sind.

Fig. 14 verdeutlicht ein Beispiel eines Phasenverlaufs 243, wie er z.B. im DOE 31B vorgesehen werden kann. Der Phasenverlauf 243 ist rotationssymmetrisch. Man erkennt ringförmige Phasenverteilungen, deren Frequenz in radialer Richtung moduliert ist. Die Ringe weisen auf die Erzeugung eines rotationssymmetrischen virtuellen Quasi-Bessel-Strahlprofils hin. Die Frequenzmodulation weist auf die Integration der Phasenkomponente der Fernfeldoptik in den Phasenverlauf zur Strahlformung hin. In Fig. 14 sind die Phasen im Bereich von ±π angedeutet. In alternativen Ausführungsformen können auch diskrete wie binäre oder mehrstufige (beispielsweise 4 oder mehr Level im Bereich der Phasenschiebung von 0 bis 2π) Phasenverläufe in DOE-Phasenmasken umgesetzt werden.

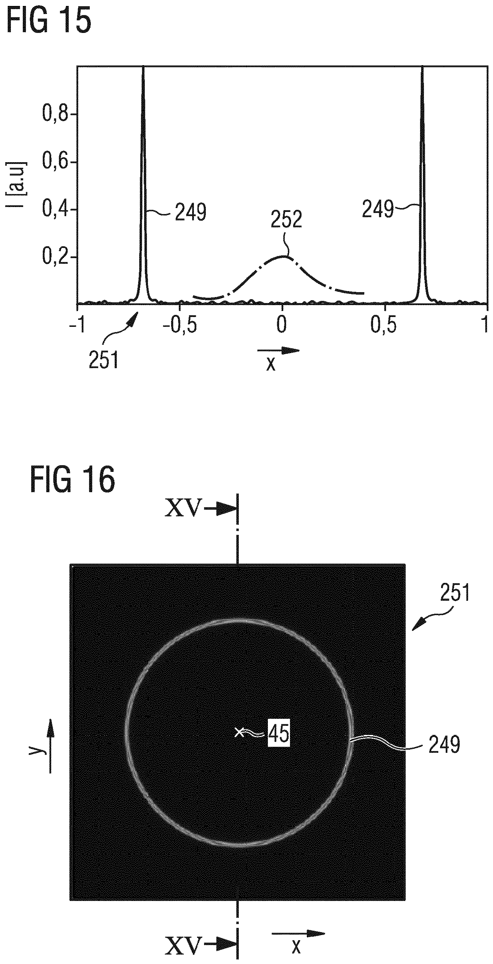

Die Figuren 15 und 16 verdeutlichen beispielhaft ein Ausgangintensitätsprofil 251 im Intensitätsquerschnitt (Fig. 15) und in der 2D-Aufsicht (Fig. 16). Man erkennt ein ringförmig um die Strahlachse 45 verlaufendes Intensitätsmaximum 249. Es liegt kaum Intensität im Strahlzentrum vor.

In einigen Ausführungsformen wird die Umwandlung in den inversen Quasi-Bessel-Strahl nicht vollständig erfolgen, so dass entsprechend ein nicht-phasenmodulierter Reststrahl, beispielsweise mit einem Gaußschen Strahlprofil, dem ringförmigen Intensitätsprofil überlagert wird. Fig. 15 deutet schematisch einen derartigen nicht-phasenmodulierten Strahlanteile 252 strich-punktiert an.

Das Maximum 249 der Intensitätsverteilung in Fig. 15 ist ein Beispiel für ein lokales Intensitätsmaximum, mit dem ein ursprüngliches Eingangsintensitätsprofil (z.B. ein Gaußsches Strahlprofil) im Bereich des transversalen Ausgangsintensitätsprofils modifiziert wurde. Die Rotationssymmetrie der Ringstruktur ist durch die Rotationssymmetrie des inversen Quasi-Bessel-Strahlprofils bedingt. In alternativen Ausführungsformen kann sich das lokale Intensitätsmaximum auf einen azimutalen Winkelbereich beschränken. Ferner kann eine Überlagerung von azimutal beschränkten und/oder ringförmigen lokalen Maxima vorliegen.

Bei der Verwendung eines refraktiven Hohlkegel-Axicons (siehe Figuren 9 und 10) zur Erzeugung eines inversen Quasi-Bessel-Strahl-förmigen Ausgangsintensitätsprofils können bei einer nicht perfekten Spitze des Axicons unerwünschte Strahlanteile unter unerwünschten Winkeln erzeugt werden. Auch bei diffraktiven Strahlformungselementen können nicht erwünschte Strahlanteile auftreten. Beispielsweise können ein nicht zu vernachlässigender nicht-phasenmodulierter Strahlanteil oder zusätzliche Beugungsordnungen im Fernfeld des Laserstrahls vorliegen.

Die hierin offenbarten optischen Systeme erleichtern aufgrund der Nutzung der Fernfeldkomponente das Einbringen und die Formauswahl von Filtern, um derartige störende Strahlanteile herauszufiltern. Insbesondere lassen sich diese unerwünschten Strahlanteile im Bereich der Fourier-Ebene leicht von den erwünschten Strahlanteilen (Nutzstrahl) separieren.

Bezugnehmend auf den nicht-phasenmodulierten Strahlanteil 252 der Fig. 15 zeigt Fig. 17 ein beispielhaftes optisches System, das auf dem in Fig. 3 dargestellten optischen System 1 beruht. Allerdings wird zusätzlich eine Filterung des nicht-phasenmodulierter Anteils im Bereich der Fourier-Ebene des Abbildungssystems 33 vorgenommen. Beispielhaft wird in Fig. 17 eine räumliche Filter-Einheit 220 strahl aufwärts der Nahfeldoptik 33B angedeutet.

Die Filter-Einheit 220 weist einen zentralen Bereich um die Strahlachse 45 auf, der beispielsweise die in Fig. 15 angedeutete Gaußförmige Intensitätsverteilung des nicht-phasenmodulierten Strahlanteils 252 blockt. Die Filter-Einheit 220 kann zusätzlich radial weiter außen liegende Abschnitte zur Blockierung höherer Ordnungen der Beugung durch das DOE oder den SLM aufweisen.

Allgemein ist somit die Filter-Einheit 220 zur Unterdrückung von nicht-phasenmodulierten Grundmoden und höheren Beugungsordnungen sowie von Streustrahlung der verschiedenen hierin offenbarten refraktiven, reflektiven oder diffraktiven Strahlformungselemente vorgesehen. Bei rotationssymmetrischen Ausgangsintensitätsprofilen ist üblicherweise auch die Filter-Einheit rotationssymmetrisch ausgebildet. In einigen Ausführungsformen können nur einzelne Abschnitte der Filter-Einheit 220 oder gar keine Filterung vorgesehen werden.

Diffraktive Strahlformungselemente erlauben einen weiteren Ansatz zur Unterdrückung des nicht-phasenmodulierten Strahlanteils. Dabei wird gezielt ein zusätzlicher Phasenbeitrag zur Ablenkung des phasenmodulierten Strahlanteils aufgeprägt.

Fig. 18 zeigt beispielsweise ein optisches System, bei dem das diffraktive optische Element 31 zusätzlich mit einem linearer Phasenbeitrag versehen wird. Der lineare Phasenbeitrag führt zu einer Ablenkung 230 des phasenmodulierten Strahls 203A. Der nicht-phasenmodulierten Strahlanteil 203B wird nicht abgelenkt und trifft beispielsweise auf eine Filtereinheit 222.

Fig. 19 zeigt eine weitere Ausführungsform eines optischen Systems, das die Nutzung der Fernfeldkomponente zusätzlich für die Implementierung eines Scan-Ansatzes ausnützt. Allgemein erlaubt es ein Scan-System, die Fokuszone 7 in einem gewissen Bereich zu verfahren. Allgemein ist es durch die Separation der Strahlformung von der Nahfeldfokussierung möglich, insbesondere für die Volumenabsorption günstige telezentrische Scan-Ansätze vorzusehen. In einigen Ausführungsformen lassen sich ferner sowohl Ort als auch Winkel einstellen. Entsprechend können es derartige Scanner-Systeme erlauben, feine Konturen in ein Werkstück zu schreiben.

In der Ausführung der Fig. 19 ist ein Scanner-Spiegel 310 in der bildseitigen Brennebene einer Nahfeldoptik 333B angeordnet. Der Scanner-Spiegel 310 lenkt den Laserstrahl im Bereich der Ausgangsintensitätsverteilung auf die seitlich angeordnete Nahfeldoptik 333B ab. Die Ablenkung in der Fourier-Ebene bewirkt, dass die Ausbreitungsrichtung im Werkstück trotz Ortsversatz erhalten bleibt. Der Scann-Bereich selbst wird durch die Größe der Nahfeldoptik 333B bestimmt.

Ist der Scanner-Spiegel 310 nicht genau in der Brennebene der Nahfeldoptik 333B angeordnet oder lässt er sich bezüglich dieser bewegen, so kann dadurch eine Ausrichtung der langgezogenen Fokuszone, insbesondere eine Winkelabweichung aus der Z-Richtung in Fig. 2, eingestellt werden.

Fig. 20 erläutert beispielhaft anhand einer Konfiguration gemäß dem in Fig. 13 gezeigten optischen Systems die zugrunde liegenden Abbildungseigenschaften. Das optische System umfasst ein Strahlformungselement 31, das auch als Fernfeldoptik fungiert und somit durch eine Brennweite f_{F} charakterisiert wird. Das optische System umfasst ferner die Nahfeldoptik 33B, die durch die Brennweite f_{N} charakterisiert wird. In Fig. 20 fallen die Brennebenen der Fernfeldoptik und der Nahfeldoptik aufeinander. Entsprechend ist in Fig. 20 nur eine Brennebene 340 gestrichelt angedeutet. In dieser Konfiguration der überlappenden Brennebenen bildet das Abbildungssystem beim Einfall einer planen Wellenfront allgemein eine virtuelle Strahlform 253 auf die langgezogene Fokuszone 7 ab, beispielsweise ein inverses Quasi-Bessel Strahlprofil, inverse modulierte oder homogenisierte Quasi-Bessel-Strahlprofile als Beispiele für inverse Quasi-Bessel/Airy-Strahl-artige Strahlformen.

Jedoch müssen die Brennebenen nicht immer übereinander liegen. Zum Beispiel kann das Abbildungssystem auf eine vorgegebene Strahldivergenz angepasst sein, der Laserstrahl 3 aber mit einer anderen Divergenz einfallen. In solchen Fällen ist der langgezogenen Fokuszone 7 immer noch ein virtuelles vor dem Strahlformungselement liegendes optisches Bild zugeordnet, aber es muss nicht eine perfekte Abbildung vorliegen. Eine ähnliche Situation kann sich bei einer bewussten Fehljustage des Abbildungssystems, beispielsweise in Zusammenhang mit einer Scanner-Vorrichtung, ergeben.

Fig. 20 verdeutlicht ferner die Begriffe "Fernfeldoptik" und "Nahfeldoptik". Die Fernfeldoptik erzeugt das Fernfeld des virtuellen Strahlverlaufs 253 im Bereich der Fernfeldbrennweite f_{F}. Wie zuvor schon erläutert kann die Fernfeldoptik in ihrer Funktion verteilt sein, z.B. aus einem oder mehreren vor und/oder nach dem Strahlformungselement und von diesem beabstandet angeordneten Komponenten gebildet werden und/oder in das Strahlformungselement integriert sein. Die Nahfeldoptik fokussiert mit der kleineren Brennweite f_{N} den Strahl in Richtung Werkstück und bildet so die Fokuszone aus. Somit liegt im Bereich der Brennebene 340 sowohl das Fernfeld des virtuellen Strahlprofils 53 bezüglich der Fernfeldoptik als auch das Fernfeld der Fokuszone 7 bezüglich der Nahfeldoptik 33B vor.

Auch bei einer nicht perfekten Abbildung (z.B. nicht aufeinander liegende Brennebenen von Fern- und Nahfeldoptik) kann im Wesentlichen ein akzeptabler Intensitätsverlauf in der Fokuszone vorliegen, da sich das auf die Nahfeldoptik treffende Intensitätsprofil nur wenig ändert.

Beispielsweise im Fall einer inversen Quasi- Bessel-Strahlform bewirkt die erste Fokussierung durch die Fernfeldoptik im Abbildungssystem eine Anpassung der Ringgröße auf der Nahfeldoptik. Insofern hat die Fernfeldoptik eine fokussierende Wirkung auf den Ringdurchmesser, welcher wie in den Figuren angedeutet, bis zu einer Art Zwischenfokus kleiner wird.

Fig. 21 erläutert den Strahlverlauf in einem optischen System für den Fall, dass ein konvergierender Laserstrahl 3' auf das Strahlformungselement 31 trifft. Der phasenmodulierte Anteil 303A des Laserstrahls wird auf die langgestreckte Fokuszone 7 fokussiert. Aufgrund der Konvergenz des einfallenden Laserstrahls 3' (und evtl. aufgrund einer separaten fokussierenden Fernfeldoptik oder einer Integration in den Phasenverlauf des Strahlformungselements 31) wird der nicht-phasenmodulierten Anteil 303B (strich-punktiert) während der Propagationslänge Dₚ sich weiter verjüngen und auf einen zentralen Bereich der Nahfeldoptik 33B treffen. Dadurch bildet sich ein Fokus 350 für den nicht-phasenmodulierten Strahlanteil 303B aus, der näher an der Nahfeldlinse 33B liegt als die langgezogene Fokuszone 7. Der nicht-phasenmodulierte Anteil wird nach dem Fokus 350 stark divergieren, so dass im Werkstück hinsichtlich des nicht-phasenmodulierten Strahlanteils 303B nicht mehr die Intensitäten erreicht werden, die zu einer nichtlinearen Absorption führen. In einer derartigen Ausgestaltung kann somit auf eine Filterung des nicht-phasenmodulierten Strahlanteils 303B verzichten werden.

Nichtsdestotrotz kann im Bereich des Fokus 350 (oder sogar zwischen Fernfeld- und Nahfeldoptik, wenn der Strahl stark anfokussiert wird) eine räumlich lokalisierte Filter-Einheit vorgesehen werden, um den nicht-phasenmodulierten Strahlanteil 303B aus der Wechselwirkungszone und dem Werkstück herauszuhalten.

Fig. 22 zeigt ein optisches System, das mit einer zusätzlichen Linse 400 strahl aufwärts der Strahlformungseinheit 31 ausgerüstet ist. Die Linse 400 - als Beispiel einer zusätzlichen fokussierenden Komponente - befindet sich in einem Abstand D_{A} zum Strahlformungselement 31.

Das Strahlformungselement 31 weist einen Phasenverlauf auf, der auf einen speziellen Strahldurchmesser eingestellt ist. Durch die Verschiebbarkeit der Linse 400 bezüglich der Strahlformungseinheit 31 kann der ausgeleuchtete Anteil des Strahlformungselements, d.h. der Strahldurchmesser des Eingangsintensitätsprofils am Strahlformungselement 31, angepasst werden.

In einigen Ausführungsformen kann die Linse 400 vor dem Strahlformungselement 31 in der Phasenmaske des Strahlformungselements 31 kompensiert werden, so dass sich die Abbildung nicht verändert und nur die 0. Ordnung, d.h. der nicht-phasenmodulierte, Anteil fokussiert wird.

Allgemein kann die Linse 400 auch als Komponente der Fernfeldoptik verstanden werden. Besteht die Fernfeldoptik aus mehreren zueinander und zur Nahfeldoptik verschiebbaren Komponenten, so kann der Abbildungsmaßstab durch geeignete Verschiebung geändert werden. In einigen Ausführungsformen können die Linse 400, das Strahlformungselement oder beides zusammen verschoben werden um den Abbildungsmaßstab des optischen Systems 1 anzupassen. In einigen Ausführungsformen kann die Linse 400 als eine erste Teleskop-Teil-Linse zur Anpassung des Strahldurchmessers auf dem Strahlformungselement verwendet werden, wobei eine zweite Teleskop-Teil-Linse in die Phasenmaske mit eingerechnet wird.

In einigen Ausführungsformen kann die Linse 400 verschoben werden, um eine Feinanpassung des Rohstrahls insbesondere für eine longitudinale Flat-Top-Strahlform oder Multispot-Ausbildung durchzuführen.

Wird der Eingangsstrahl derart gewählt, dass am Strahlformungselement 31 ein konvergenter oder divergenter Strahl vorliegt, kann auch hier entsprechend Fig. 21 unter gewissen Umständen auf eine Filter-Einheit für den nicht-phasenmodulierten Strahlanteil 403B verzichtet werden. D.h., Intensitäten für die nicht lineare Absorption im Werkstück werden nur vom phasenmodulierten Strahlanteil 403A erreicht.

Diffraktive optische Elemente erlauben eine digitalisierte und z.B. pixelbasierte Phasenanpassung über das Eingangsintensitätsprofil. Ausgehend von dem Intensitätsverlaufs einer inversen Quasi-Bessel-Strahlform kann beispielsweise ein longitudinales Flat-Top-Intensitätsprofil in der Fokuszone 7 erzeugt werden. Dazu wird der Phasenverlauf im Strahlformungselement derart beeinflusst, dass Intensitätsbeiträge im Ausgangsintensitätsprofil aus dem das Intensitätsmaximum und den Ausläufern des Bessel-Strahls formenden Bereich herausgenommen und durch eine Phasenänderung derart radial umverteilt werden, dass bei der späteren Fokussierung durch die Nahfeldoptik 33B der Anstiegsbereich 61A und der Abfallbereich 61B verstärkt bzw. weiter ausgedehnte Ausläufer (z.B. durch Schieben von Leistung aus den Ausläufern in den homogenisierten Bereich) weitgehend vermieden werden.

Ein entsprechendes Ausgangsintensitätsprofil 551 ist in den Figuren 23 (Intensitätsquerschnitt) und 24 (2D-Aufsicht) gezeigt. Man erkennt, dass - im Vergleich zur Fig. 15 - im Intensitätsquerschnitt der Fig. 23 das lokale Maximum in radialer Richtung verbreitert und moduliert ist. Es ergibt sich eine entsprechend radial ausgedehnte modulierte Ringstruktur 549.

Fig. 25 zeigt die Fokussierung einer derartigen Ausgangsintensitätsverteilung 551. Es ergibt sich eine longitudinal quasi-homogenisierte Intensitätsverteilung (Flat-top) 561 über einen Bereich von ca. 700 µm in Z-Richtung.

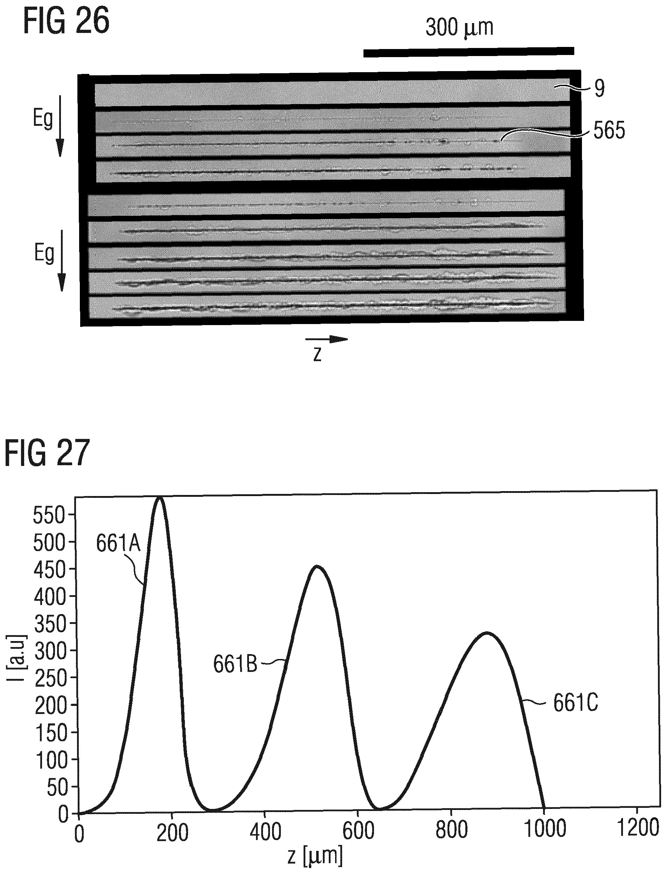

Fig. 26 zeigt analog zu Fig. 6 von Modifikationszonen 565 (Modifikationen) in einem transparenten Material 9. Die oberen vier Aufnahmen verdeutlichen wiederum das Schwellenverhalten bei Pulsgruppenenergie Eg von ca. 20 µJ bis 40 µJ, die unteren vier Aufnahmen zeigen zunehmende Pulsgruppenenergien Eg von ca. 30 µJ bis 200 µJ. Man erkennt, dass sich die Modifikationszonen bei Überschreiten der Schwelle im Wesentlichen immer über den gleichen Ausdehnungsbereich in Z-Richtung im Werkstück 9 ausbilden. Dies beruht auf der nahezu konstanten Intensität mit nur einem kurzen Anstieg und Abfall. Mit zunehmender Energie wird allerdings nicht nur die Stärke sondern auch die laterale Ausdehnung der Modifikationszonen größer.

Eine weitere Ausführungsform, die es erlaubt in Ausbreitungsrichtung eine Sequenz von Intensitätsüberhöhung zu erreichen, ist in Fig. 27 gezeigt. Allgemein können ergänzende Phasenaufprägung im Bereich der bildseitigen Brennebene der Nahfeldoptik 33B wie laterale und/oder longitudinale Multispotphasenaufprägungen vorgenommen werden. Im Speziellen erkennt man in Fig. 27 eine Sequenz von drei Intensitätsmaxima 661A, 661B und 661C, die jeweils einen Intensitätsverlauf gemäß Fig. 4 aufweisen.

Diese Sequenz kann durch eine longitudinale Multispotphasenaufprägung oder den Einsatz einer Multifokallinse als Nahfeldoptik 33B erzeugt werden. So kann beispielsweise ein zusätzliches diffraktives optisches Element im Bereich der Fourier-Ebene (Brennebene der Nahfeldoptik 33B) oder nahe der Nahfeldoptik 33B vorgesehen werden, das eine zusätzliche Phasenmodulation für die drei Foki bereitstellt. Derartige Phasenanpassungen sind beispielsweise aus EP 1 212 166 B1 bekannt.

In Zusammenhang mit den Figuren 28 bis 31 wird eine weitere mögliche Ausbildung einer langgezogenen Fokuszone 7 für den Fall einer beschleunigten Airy-Strahl-artigen Strahl form verdeutlicht.

Fig. 28 zeigt einen Phasenverlauf 743, wie er im Strahlformungselement 31 auf das Eingangsintensitätsprofil geprägt werden kann. Dabei umfasst der Phasenverlauf 743 den Phasenverlauf, der für eine Erzeugung des beschleunigten Strahls benötigt wird, und den Phasenverlauf einer konkave Linse, der eine Rohstrahlkonvergenz kompensiert. Allgemein erzeugt eine Phasenmaske eines beschleunigten Strahls einen gut kollimierten Strahl, welcher sich nicht wesentlich über die Propagationsdistanz ändert und dann mit der Nahfeldkomponente in eine sogenannte beschleunigte Strahlform fokussiert wird.

Die Figuren 29 und 30 verdeutlichen das zugehörige Ausgangsintensitätsprofil 751 im Schnitt (Fig. 29) und in der Aufsicht (Fig. 30). Man erkennt, dass das Intensitätsmaximum leicht aus dem Zentrum (d. h. neben der Strahlachse 45) in Y-Richtung verschoben ist. Somit ist das transversale Ausgangsintensitätsprofil 751 bezüglich des Eingangsintensitätsprofils mit einem außerhalb der Strahlachse 45 liegenden lokalen Maximum 749 modifiziert.

Die Fokussierung eines derartigen Ausgangsintensitätsprofils 751 führt zu der in Fig. 31 dargestellten, langgezogenen und gekrümmten Fokuszone 707. Diese erlaubt es, dass ein derartiges beschleunigtes Strahlprofil auch in Kombination mit nicht transparenten Medien verwendet werden kann, wenn die Fokuszone beispielsweise in Y-Richtung an den Rand eines derartigen Materials herangeführt wird. Die sich ergebende Wechselwirkung würde beispielsweise zu einer Abrundung der Materialseite führen. In anderen Ausführungsformen kann ein derartiges Strahlprofil mit transparenten Materialien zum Schneiden mit gekrümmten Schnittflächen eingesetzt werden.

In einigen Ausführungsformen kann ein optisches System zum Beispiel derart ausgebildet werden, dass sowohl eine reale Intensitätsüberhöhung gemäß Fig. 7 als auch eine virtuelle Intensitätsüberhöhung gemäß Fig. 3 erzeugt wird. Auf diese Weise kann die longitudinale Ausdehnung von Modifikationszonen erweitert werden.

Fig. 32 zeigt schematisch ein beispielhaftes optisches System mit einem binären DOE 31C. Fällt ein Laserstrahl 3 auf das binäre DOE 31C bildet sich zum einen eine reale Intensitätsüberhöhung 871, beispielsweise ein Quasi-Bessel-Strahl strahlabwärts des DOE 871 aus. Zum anderen formt sich ein Strahlanteil, dem ein strahlaufwärts des DOE 871 liegendes virtuelles Bild 853 einer langgezogenen Fokuszone 807A, beispielsweise in Form eines inversen Quasi-Bessel-Strahls, zugeordnet ist.

Das optische System umfasst ferner ein Teleskopsystem 833 mit einer Fernfeldoptik 833A und einer Nahfeldoptik 833B. Das Teleskopsystem 833 bildet sowohl das virtuelle Bild 853 als auch die reale Intensitätsüberhöhung 871 in das zu bearbeitende Material 9 ab. Dazu wird das binäre DOE 31C in oder nahe der Brennebene der Fernfeldoptik 833A positioniert.

Die Abbildung führt zu einem verlängerten Wechselwirkungsbereich, der den auf der langgezogenen Fokuszone 807A und die auf die reale Intensitätsüberhöhung 871 zurückgehende Fokuszone 807B umfasst. In der sich ergebenden Sequenz von aufeinanderfolgenden Fokuszonen 807A und 807B verläuft die Intensität für (inverse) Quasi-Bessel-Strahlen zuerst gemäß dem in Fig. 4 gezeigten Intensitätsverlauf und im Anschluss gemäß dem in Fig. 8 gezeigten Intensitätsverlauf. So ergibt sich ein Intensitätsverlauf mit einem durch den starken Intensitätsabfall 61B und dem starken Intensitätsanstieg 81A gebildeten intensitätsarmen Zwischenraum. Dieser intensitätsarme Zwischenraum kann beispielsweise bei der Bearbeitung von einem Paar von aufeinanderliegenden Werkstücken im Bereich der Kontaktzone vorgesehen werden. Ferner erlaubt dieser Ansatz, dass bei gleichem Eingangsstrahldurchmesser und gleichem vom optischen System abgedeckten Winkelbereich die doppelte Länge für die Wechselwirkung erzielt werden kann.

In einigen Ausführungsformen kann in den Bereich zwischen den aufeinanderfolgenden Fokuszonen 807A und 807B der nicht-phasenmodulierte Anteil fokussiert werden. Ein zugehöriger Gaußscher Fokus 807C ist schematisch in Fig. 32 ebenfalls angedeutet. In derartigen Ausführungsformen kann ferner eine Anpassung der Beugungseffizienz ermöglicht werden, da der nicht-phasenmodulierte Strahl zum Füllen der Intensitätslücke eingesetzt wird.

Hierein wurden einige Aspekte beispielhaft anhand ausgewählter virtueller Strahlprofile beschrieben. Allgemein können diese Aspekte auf die hierein als (inverse) virtuelle Strahlformen beschriebenen Strahlarten wie inverse Quasi-Bessel/Airy-Strahl-artige Strahlformen, z.B. inverse Quasi-Bessel -Strahlprofile oder inverse modulierte oder homogenisierte Quasi-Bessel-Strahlprofile, übertragen werden.

In Zusammenhang mit den Figuren 33A bis 33D und 34 wird für einen inversen Quasi-Bessel-Strahl die Propagation vom Strahlformungselement zur Nahfeldoptik mittels Strahlprofilen und Amplitudenverläufen erläutert. Hellere Grauwerte entsprechen größeren Amplituden. Ein entsprechender inverser Quasi-Bessel-Strahl kann mit den hierein beschriebenen refraktiven, reflektiven und diffraktiven optischen Systemen erzeugt werden, beispielsweise mit den (Hohlkegel-)Axicon-Systemen und den DOE-Systemen. Ein DOE-System kann beispielsweise auf dem in Fig. 14 gezeigten Phasenverlauf einer Phasenmaske basieren, in dem neben der für den inversen Quasi-Bessel-Strahl benötigen Phase ein fokussierender Phasenbeitrag vorgesehen ist.

Es wird angenommen, dass ein Laserstrahl mit einem rotationssymmetrischen Gaußschen Strahlprofil auf das Strahlformungselement eingestrahlt wird. Ein Gaußsches Strahlprofil weist einen durch das Strahlzentrum Gaußförmig verlaufenden transversalen Amplitudenverlauf auf. Die Figuren 33A, 33B, 33C und 33D zeigen jeweils die Entwicklung der Strahlprofile 900A, 900B, 900C und 900D und der zugehörigen schematischer Amplitudenverläufe 902A, 902B, 902C und 902D, letztere direkt nach dem Strahlformungselement bei z = 0 mm und in einem Abstand strahlabwärts von z = 10 mm, z = 50 mm sowie in der Brennebene der nachfolgenden Nahfeldkomponente bei z = 200 mm. Es wird eine Umwandlung zu 100 % angenommen, d.h. es entsteht kein Störstrahlanteil z.B. in Form von nicht-phasenmoduliertem oder gestreutem Licht.

Fig. 34 zeigt den Amplitudenverlauf für einen Schnitt entlang der Strahlachse Z ausgehend vom Ausgang des Strahlformungselements bei z = 0 mm bis zur Nahfeldlinse bei z = 250 mm.

Die Positionen der Strahlprofile 900A, 900B, 900C und 900D sind in Fig. 34 mit Pfeilen angezeigt.

Man erkennt, dass aufgrund der reinen Phasenmaske direkt nach dem Strahlformungselement noch ähnlich dem Gaußschen Strahl ein Gaußsches Strahlprofil 900A und ein Gaußscher Amplitudenverlauf 902A vorliegen. Ein scharf begrenztes Loch bildet sich dann allerdings aufgrund der aufgeprägten zur zusätzlichen Divergenz führenden Phase sofort aus. Schon bei z = = 10 mm erkennt man einen klaren schwarzen Punkt 904 im Zentrum des Strahlprofils 900B. Dieser wird immer größer. Gleichzeit formt sich ein Ringbereich 906 mit hoher Amplitude aus.

Der Ringbereich 906 ist nach innen scharf begrenzt, was man durch eine Stufenform in der radialen Amplituden-/Intensitätsverteilung erkennt. Eine Flanke 907 der rundumlaufenden Stufe zeigt zur Strahlachse/zum Strahlzentrum. Mit zunehmenden z-Werten wandern die gegenüberliegenden Abschnitte der Flanke 907 auseinander, d.h. das zentrale scharf abgegrenzte Loch nimmt schnell im Durchmesser zu (D1 < D2).

In der radialen Amplituden-/Intensitätsverteilung fällt der Ringbereich 906 nach außen mit zunehmenden z-Werten immer schneller ab. Diese Entwicklung ist schematisch in abfallenden Flanke 908A bis 908C der Amplitudenverläufen 902A bis 902C gezeigt. Im Fernfeld, d.h. beispielsweise in den überlappenden Brennebenen der aufgeprägten fokussierenden (Fernfeld-) Wirkung und der Nahfeldoptik, hat sich ein scharfer Ring 908D im Strahlprofile 900D ausgebildet, der anschließend wieder auseinanderläuft (siehe Fig. 34). Dabei bildet sich nun eine scharfe Kante auf der Außenseite aus, d.h. die Stufe zeigt nun mit ihrer Flanke nach außen.

In Fig. 34 erkennt man die scharfe Kante im Übergang zwischen dem dunklen, sich in Z-Richtung verbreiternden Bereich 910A und dem sich in Z-Richtung verjüngenden und helleren Randbereich 910B, wobei die Grauwerte im helleren Randbereich 910B zuerst radial innen und dann, ab der Brennebene, radial außen erhöht sind.

Dieses prinzipielle Verhalten der Strahlprofile und Amplitudenverteilungen erlaubt einen Test eines optischen Systems mit einem Gaußschen Eingangsstrahl, bei dem sich zuerst ein Loch mit einer steiler nach innen zeigenden Flanke ausbildet und damit zu einem lokalen Maximum außerhalb der Stahlachse im Fernfeld führt. Ein Abbilden der Strahlprofile aus dem Inneren Bereich als auch im Bereich der Fokuszone kann das entsprechende Strahlprofil kenntlich machen. Die Nutzung des optischen Systems ist dabei nicht zwangsweise auf Gaußsche Strahlen eingeschränkt. Ferner ist zu bemerken, dass die Figuren sich aus Berechnungen für den idealen Fall ergeben. Wird z.B. ein nicht ideales DOE eingesetzt, kann der angesprochene nicht-phasenmodulierte Anteil oder höhere Ordnungen oder ein Teil eines realen Quasi-Bessel-Strahls (z.B. wie bei einer binären Maske) auf der Strahlachse liegen und das "Loch" mit Intensität auffüllen.

Ein inverser Quasi-Bessel-Strahl kann somit im Amplitudenverlauf und damit im Intensitätsprofil insbesondere eine Stufe mit einer steilen Flanke aufweisen. Diese kann insbesondere im Bereich nahe dem Strahlformungselement nach innen weisen, beispielsweise im Bereich bis zur Hälfte des Fernfeldes und insbesondere im Bereich einer Fokuslänge der Fernfeldoptik strahlabwärts des Strahlformungselements. Für einen "einfachen" inversen Quasi-Bessel-Strahl ohne Untergrund auf der Strahlachse erhöht sich im Bereich der Stufe die Amplitude/Intensität von nahe Null auf das Maximum des phasenmodulierten Strahlanteils. Dabei ist die Ausbildung der Stufe (im phasenmodulierten Strahlanteil) auch für einen beispielsweise einfallenden Strahl mit im Wesentlichen konstanter radialer Intensität (radialer Flat-top) über das Strahlformungselement gegeben, da die Stufe im Wesentlichen das Strahlzentrum betrifft.

Die zuvor beschriebene Strahlcharakteristik strahl aufwärts der Fernfeldbrennebene ist nach dieser bis zur Fokuszone radial invertiert. Nach der Fokuszone kehrt er sich radial noch einmal um, so dass sich dort - ohne Wechselwirkung mit einem zu bearbeitenden Material - wiederum eine Stufenform einstellen kann. Die Strahlprofile können beispielsweise durch Abgreifen des Strahls an entsprechender Stelle analysiert werden, sei es im optischen System nach dem Strahlformungselement oder vor oder nach der Fokuszone. Insbesondere bei Anordnungen, die ein Blocken eines zentralen Störstrahls erlauben, kann so vor und nach dem Fokusbereich der Intensitätsverlauf der phasenmodulierten Strahlanteile analysiert werden.

In diesem Zusammenhang ist ferner auf die am gleichen Tag von der Anmelderin eingereichte deutsche Patentanmeldung verwiesen, die insbesondere auf Möglichkeiten der Verwendung von DOEs bei der Erzeugung von inversen Quasi-Bessel-Strahl-artigen oder inversen Quasi-Airy-Strahl-artigen Strahlformen eingeht. Der Inhalt dieser Anmeldung ist hierin in vollem Umfang einbezogen. Wie darin allgemein erläutert wird, können sich beispielsweise mehrere Stufen bei der Erzeugung mehrere (inverser) Quasi-Bessel-Strahlen ausbilden, die im Falle des Bezugs zu einem virtuellen Bild, insbesondere stark ausgeprägte, in den entsprechenden longitudinalen Abschnitten nach innen (vor Fernfeldbrennebene und nach Fokuszone) bzw. nach außen (zwischen Fernfeldbrennebene und Fokuszone) zeigende Flanken aufweisen können.

Weitere Ausführungsformen und/oder Weiterbildungen der hierin offenbarten Aspekte sind im Folgenden zusammengefasst:
Das transversale Ausgangsintensitätsprofil kann einem Fernfeldintensitätsprofil des virtuellen optischen Bildes und/oder einem Fernfeldintensitätsprofil der Fokuszone bezüglich der Nahfeldoptik entsprechen.

Eine vorgegebene Eingangsstrahlform des Laserstrahls kann das transversale Eingangsintensitätsprofil, einen Strahldurchmesser, ein transversales Eingangsphasenprofil, eine Eingangsdivergenz und/oder eine Polarisation aufweisen und das optische System kann dazu ausgebildet sein, die vorgegebene Eingangsstrahlform in eine konvergierende Ausgangsstrahlform am Ausgang der Nahfeldoptik zu überführen, wobei ein Nahfeld der Ausgangsstrahlform die langgezogenen Fokuszone ausbildet.

Das optische System kann eine ergänzende Phasenaufprägungseinheit im Bereich der bildseitigen Brennebene der Nahfeldoptik, insbesondere zur lateralen und/oder longitudinalen Multispotphasenaufprägung, aufweisen.

Allgemein können hierin beschriebene Fokussierelemente wie die Fern- und Nahfeldoptiken als z.B. Linse, Spiegel, DOE oder eine Kombination derselben ausgeführt werden.

Ferner können in optische Systeme wie den hierin beschriebenen Ausführungsbeispielen zusätzliche optische Elemente eingefügt werden. Unter anderem können Zwischenabbildungen im Abbildungssystem eingefügt werden, um beispielsweise sowohl eine Filterfunktion als auch gleichzeitig eine Scanbewegung im Bereich der bildseitigen Brennebene realisieren zu können. Dadurch kann z.B. die bildseitige Brennebene (z.B. Bildebene 340 in Fig. 20) selbst durch ein zusätzliches optisches System abgebildet werden. Alternativ oder zusätzlich können derartige optische Zwischensysteme es erlauben, beispielsweise einen vergrößerten Arbeitsabstand und/oder eine Vergrößerung des Arbeitsfeldes bei Scanner-Applikation zu realisieren.

## Patentansprüche

1. Optisches System (1) zur Strahlformung eines Laserstrahls (3) für die Bearbeitung eines insbesondere für den Laserstrahl weitgehend transparenten Materials (9) durch Modifizieren des Materials (9) in einer in Propagationsrichtung (5) langgezogenen Fokuszone (7) mit
einem Strahlformungselement (31), das dazu ausgebildet ist, den Laserstrahl (3) mit einem transversalen Eingangsintensitätsprofil (41) aufzunehmen und dem Laserstrahl (3) einen strahlformenden Phasenverlauf (43) über das transversale Eingangsintensitätsprofil (41) zum Erzeugen einer langgezogenen Fokuszone (7) aufzuprägen, und
einer Nahfeldoptik (33B), die strahlabwärts mit einem Strahlformungsabstand (Dp) zum Strahlformungselement (31) angeordnet ist und die dazu ausgebildet ist, den Laserstrahl (3) in die Fokuszone (7) zu fokussieren, **dadurch gekennzeichnet, dass**
das Strahlformungselement (31) ferner als Teil eines Abbildungssystems (33) dazu ausgebildet ist, dem Laserstrahl (3) zusätzlich einen Phasenverlauf mit fokussierender Wirkung aufzuprägen, so dass eine Abbildung durch den zusätzlich aufgeprägten Phasenverlauf des Strahlformungselements (31) als Fernfeldfokussierwirkung und die Fokussierung durch die Nahfeldoptik (33B) als Nahfeldfokussierwirkung erfolgt.

2. Optisches System (1) nach Anspruch 1, wobei
das Strahlformungselement (31) als im Wesentlichen rein phasenmodulierend ausgebildet ist, so dass insbesondere bei der Aufprägung des Phasenverlaufs (43) das Eingangsintensitätsprofil (41) am Strahlformungselement (31) unter weitgehender Vermeidung einer Amplitudenmodulation beibehalten wird, und/oder
das Strahlformungselement (31) zur Verwendung in Transmission oder Reflexion ausgebildet ist, wobei die Aufprägung des Phasenverlaufs (43) diffraktiv erfolgt, und/oder
das Strahlformungselement (31) als ein, insbesondere programmierbares oder fest-eingeschriebenes, diffraktives optisches Element (31, 31A, 31B), insbesondere als ein räumlicher Lichtmodulator, zur Phasenaufprägung ausgebildet ist.

3. Optisches System (1) nach Anspruch 1 oder 2, wobei das Abbildungssystem (33) mit einem verkleinernden Abbildungsverhältnis zum Erzeugen der langgezogenen Fokuszone (7) ausgebildet ist.

4. Optisches System (1) nach Anspruch 3, wobei
das Strahlformungselement (31) ferner als Teil des Abbildungssystems (33) dazu ausgebildet ist, dem Laserstrahl (3) einen sphärischen Phasenverlauf mit fokussierender Wirkung aufzuprägen.

5. Optisches System (1) nach einem der vorhergehenden Ansprüche, wobei das Abbildungsverhältnis gegeben ist durch ein Verhältnis X: 1, mit X ≥ 1, und das Strahlformungselement (31) mit einem Abstand zur Nahfeldoptik (33B) angeordnet ist, der im Wesentlichen höchstens dem (1+2X)-fachen einer Brennweite (f_{N}) der Nahfeldoptik (33B) entspricht.

6. Optisches System (1) nach einem der vorhergehenden Ansprüche, wobei
der aufgeprägte strahlformende Phasenverlauf dazu ausgebildet ist, im Falle eines einfallenden Laserstrahls mit einer Gaußscher Intensitätsverteilung mindestens für einen Anteil des einfallenden Laserstrahls (3) einen divergenten einem virtuellen optischen Bild zugeordneten Strahlbereich (55A, 55B) zu erzeugen, der strahlabwärts des diffraktiven optischen Strahlformungselements (31) eine transversale Intensitätsverteilung (57A, 57B) aufweist, die von innen nach außen abnimmt, und
diese transversale Intensitätsverteilung (57A, 57B) insbesondere strahl aufwärts einer strahlabwärtsliegenden Brennebenen (340) der Fernfeldoptik (33A), und insbesondere ferner strahl aufwärts einer Ausbildung einer Ringstruktur, einer auf einen azimutalen Winkelbereich beschränkten Ringsegmentstruktur und/oder eines lokalen Maximums, vorliegt, und
ein phasenaufgeprägter Strahlbereich (55A, 55B) einen lateralen Intensitätsverlauf (57A, 57B) mit einem Abschnitt eines stufenförmigen Intensitätsanstiegs aufweist, der insbesondere eine radial nach innen zeigende Flanke (907) im Bereich zwischen dem Strahlformungselement (31) und einer Brennebene, welcher der Nahfeldoptik (33B) (33A) und/oder der dem Strahlformungselement (31) zusätzlich aufgeprägten Phase mit fokussierender Wirkung zugeordnet ist, aufweist, und der insbesondere eine radial nach außen zeigende Flanke im Bereich zwischen der Brennebene, welche der Nahfeldoptik (33B) und/oder der dem Strahlformungselement (31) zusätzlich aufgeprägten Phase mit fokussierender Wirkung zugeordnet ist, und der Fokuszone (7) aufweist, und/oder
der Phasenverlauf (43) derart ist, dass die Fokussierung des derartig phasenaufgeprägten Strahlanteils ein inverses Quasi-Bessel-Strahl-artiges Strahlprofil und/oder ein inverses Quasi-Airy-Strahl-artiges Strahlprofil mit einer in Propagationsrichtung (5) langgezogenen Fokuszone (7) ausbildet, bei dem insbesondere nur ein Zentralbereich des einfallenden Laserstrahls Beiträge zu einem strahlabwärts liegenden Ende der langgezogenen Fokuszone (7) liefert.

7. Optisches System (1) nach einem der vorhergehenden Ansprüche, wobei das Strahlformungselement (31) ferner zur Aufprägung eines linearen Phasenverlauf ausgebildet ist, so dass insbesondere eine räumliche Trennung eines Nutzstrahlanteils (203A) von einem Störstrahlanteil (203B) durch eine lateralen Strahlablenkung (230) des Nutzstrahlanteils (203A) bewirkt wird.

8. Optisches System (1) nach einem der vorhergehenden Ansprüche, wobei
die langgezogene Fokuszone (7) ein Aspektverhältnis von mindestens 10:1, beispielsweise 20:1 und mehr, und/oder eine maximale Änderung der lateralen Ausdehnung der (wirksamen) Intensitätsverteilung über die Fokuszone im Bereich von 50 % und weniger, z.B. 20 % und weniger oder 10 % und weniger aufweist, und/oder
strahlabwärts der langgezogenen Fokuszone (7) der Laserstrahl in Abwesenheit eines zu bearbeitenden Materials (9) Bereiche aufweist, in denen ein radialer Intensitätsverlauf einen Abschnitt eines stufenförmigen Intensitätsanstiegs, insbesondere mit einer radial nach innen zeigenden Flanke gefolgt von einem im Vergleich zur Stufe langsameren, nach außen abnehmenden Intensitätsabfall, aufweist.

9. Optisches System (1) nach einem der vorhergehenden Ansprüche, ferner mit
einer räumlichen Filter-Einheit (220) zum Herausfiltern eines Störstrahlanteils, insbesondere eines zentralen nicht-phasenmodulierten Störstrahlanteils und/oder von Strahlanteilen höherer Beugungsordnung, wobei die räumliche Filter-Einheit (220) insbesondere zwischen dem Strahlformungselement (31) und der Nahfeldoptik (33B), beispielsweise im Bereich der eingangsseitigen Brennebene der Nahfeldoptik (33B), angeordnet ist, und/oder
einer, insbesondere zwischen dem Strahlformungselement (31) und der Nahfeldoptik (33B) angeordneten, Scan-Einheit (310) zum Scannen der langgezogenen Fokuszone (7) bzgl. des Materials (9), wobei die Scan-Einheit (310) insbesondere im Bereich der eingangsseitigen Brennebene der Nahfeldoptik (33B) angeordnet ist, und/oder
einer Strahlaufbereitungseinheit (13) zum Anpassen des Eingangsintensitätsprofil (41), der Eingangsdivergenz und/oder der Polarisation des Laserstrahls (3) und/oder
einem Zwischenabbildungssystems im Abbildungssystem (33), insbesondere zur Erzeugung einer zweiten Brennebene für den Einsatz einer Filter-Einheit (220) und/oder einer Scan-Einheit (310).

10. Optisches System (1) nach einem der vorhergehenden Ansprüche, wobei der aufgeprägte Phasenverlauf (43) derart ist, dass dem Laserstrahl (3) ein virtuelles, vor dem Strahlformungselement (31) liegendes optisches Bild (53) der langgezogenen Fokuszone (7) zugeordnet ist, und
der Strahlformungsabstand (Dp) einer Propagationslänge des Laserstrahls (3) entspricht, in der der aufgeprägte Phasenverlauf (43) das transversale Eingangsintensitätsprofil (41) in ein transversales Ausgangsintensitätsprofil (51) im Bereich der Nahfeldoptik (33B) überführt und das transversale Ausgangsintensitätsprofil (51) im Vergleich mit dem Eingangsintensitätsprofil (41) ein außerhalb einer Strahlachse (45) liegendes lokales Maximum (49) aufweist.

11. Laserbearbeitungsanlage (21) für die Bearbeitung eines insbesondere für den Laserstrahl weitgehend transparenten Materials (7) mit einem Laserstrahl (3) durch Modifizieren des Materials (7) in einer in Propagationsrichtung (5) des Laserstrahls (3) langgezogenen Fokuszone (7) mit
einer Laserstrahlquelle (11),
einem optischen System (1) gemäß einem der vorhergehenden Ansprüche und
einer Werkstücklagerungseinheit (25) zur Lagerung des Materials (9) als Werkstück.

12. Laserbearbeitungsanlage nach Anspruch 11, ferner ausgebildet zur Durchführung einer Relativbewegung zwischen Werkstücklagerungseinheit (25) und Fokuszone (7), und/oder
ferner mit
einer Steuerung zur Einstellung einer Position der Fokuszone (7) bezüglich der Werkstücklagerungseinheit (25) und/oder zur Einstellung eines Parameters des Laserstrahls (3) und/oder des optischen Systems (1), der eine Verlängerung der langgezogenen Fokuszone (7) in Richtung strahl aufwärts bewirken, wobei gleichzeitig die Position des strahlabwärts liegenden Endes der langgezogenen Fokuszone (7) bezüglich der Werkstücklagerungseinheit (25) im Wesentlichen im Wesentlichen ohne Nachkorrektur eines Abstands einer Nahfeldoptik (33B) zur Werkstücklagerungseinheit (25) beibehalten wird.

13. Laserbearbeitungsanlage nach Anspruch 11 oder 12, wobei die Laserstrahlquelle (11) ferner dazu ausgebildet ist, einen Laserstrahl zu erzeugen, der das Material (9) durch nichtlineare Absorption modifiziert, und insbesondere für beispielsweise ps-Laserpulse auf eine Fluenz von 2 J/cm² in der langgezogenen Fokuszone (7) fokussierbar ist.

14. Verfahren zur Strahlformung eines Laserstrahls (3) mit einem transversalen Eingangsintensitätsprofil (41) für die Bearbeitung eines insbesondere für den Laserstrahl weitgehend transparenten Materials (9) durch Modifizieren des Materials (9) in einer in Propagationsrichtung (5) langgezogenen Fokuszone (7) mit den Schritten:
Aufprägen eines strahlformenden Phasenverlaufs (43) über das transversale Eingangsintensitätsprofil (41) zur Erzeugung einer langgezogenen Fokuszone und zusätzlich eines weitgehend sphärischen Phasenverlauf mit fokussierender Wirkung,
Propagieren des Laserstrahls (3) über einen Strahlformungsabstand (Dp), nach dem der aufgeprägte Phasenverlauf (43) das transversale Eingangsintensitätsprofil (41) in ein transversales Ausgangsintensitätsprofil (51) übergeführt hat, und
Fokussieren des Laserstrahls (3) in die Fokuszone (7) zur Ausbildung eines Nahfeldes basierend auf dem Ausgangsintensitätsprofil (51).

15. Verfahren nach Anspruch 14, wobei die Aufprägung des Phasenverlaufs (43) unter weitgehender Vermeidung einer Amplitudenmodulation durchgeführt wird und/oder zusätzlich ein linearer Phasenverlauf aufgeprägt wird und/oder ein Störstrahlanteil, insbesondere ein zentraler nichtmodulierter Störstrahlanteil und/oder Strahlanteile höherer Beugungsordnung, herausgefiltert wird und/oder die langgezogene Fokuszone (7) bzgl. des Materials (9) gescannt wird und/oder eine Verlängerung der langgezogenen Fokuszone (7) in Richtung strahlaufwärts, insbesondere durch Vergrößerung des Eingangsstrahldurchmessers und/oder der einfallenden Leistung, bewirkt wird, wobei gleichzeitig die Position des strahlabwärts liegenden Endes der langgezogenen Fokuszone (7) bezüglich der Werkstücklagerungseinheit (25) im Wesentlichen im Wesentlichen ohne Nachkorrektur eines Abstands einer Nahfeldoptik (33B) zur Werkstücklagerungseinheit (25) beibehalten wird.

## Claims

1. An optical system (1) for beam shaping of a laser beam (3) for processing an in particular for the laser beam largely transparent material (9) by modifying the material (9) in a focus zone (7) that is elongated in propagation direction (5), the optical system comprising
a beam shaping element (31) that is configured to receive the laser beam (3) having a transverse input intensity profile (41) and to impose a beam shaping phase distribution (43) over the transversal input intensity profile (41) onto the laser beam (3) for generating an elongated focus zone (7); and
a near field optics (33B), which is arranged downstream of the beam shaping element (31) at a beam shaping distance (Dp) and configured to focus the laser beam (3) into the focus zone (7), **characterized in that**
the beam shaping element (31) is further configured as a part of an imaging system (33) to impose onto the laser beam (3) additionally a phase distribution with focusing action such that there is performed an imaging by the additionally imposed phase distribution of the beam shaping element (31) as far field focusing action and the focusing by the near field optics (33B) as near field focusing action .

2. The optical system (1) of claim 1, wherein
the beam shaping element (31) is configured as essentially only phase-modulating so that in particular when imposing the phase distribution (43) the input intensity profile (41) at the beam shaping element (31) is maintained, while for the most part an amplitude modulation is avoided; and/or
the beam shaping element (31) is configured for use in transmission or reflection, wherein the imposing of the phase distribution (43) is performed diffractive; and/or
the beam shaping element (31) is configured for the phase imposing as a diffractive optical element (31, 31A, 31B), in particular being programmable or permanently written, in particular as a spatial light modulator.

3. The optical system (1) of claim 1 or 2, wherein the imaging system (33) is configured with a demagnifying imaging ratio for generating the elongated focus zone (7).

4. The optical system (1) of claim 3, wherein
the beam shaping element (31) is as a part of the imaging system (33) further configured to impose onto the laser beam (3) a spherical phase distribution with focusing action.

5. The optical system (1) of anyone of the preceding claims, wherein
the imaging ratio is given by a ratio X: 1, with X ≥ 1, and the beam shaping element (31) is arranged at a distance to the near field optics (33B) that corresponds essentially at the most to the (1+2X)-times of a focal length (f_{N}) of the near field optics (33B).

6. The optical system (1) of anyone of the preceding claims, wherein
the imposed beam shaping phase distribution is configured to generate, in the case of an incident laser beam having a Gaussian intensity distribution, at least for a portion of the incident laser beam (3) a divergent beam area (55A, 55B), which is attributed to a virtual optical image and comprises downstream of the diffractive optical beam shaping element (31) a transverse intensity distribution (57A, 57B), which decreases from the inside to the outside, and
this transverse intensity distribution (57A, 57B) is present in particular upstream of a downstream focal plane (340) of the far field optics (33A), and is in particular further upstream of a formation of a ring structure, of a ring segment structure limited to an azimuthal angular range, and/or of a local maximum; and
a phase imposed beam area (55A, 55B) comprises a lateral intensity distribution (57A, 57B) having a section of a step-shaped increase of intensity, which in particular comprises a radially inward facing flank (907) in the region between the beam shaping element (31) and a focal plane, which is attributed to the near field optics (33B) and/or the phase with focusing action provided additionally to the beam shaping element (31), and that in particular comprises a radially outward facing flank in the region between the focal plane, which is attributed to the near field optics (33B) and/or the phase with focusing action provided additionally to the beam shaping element (31), and the focus zone (7); and/or
the phase distribution (43) is such that the focusing of such a phase imposed beam portion forms an inverse quasi-Bessel beam-like beam profile and/or an inverse quasi-Airy beam-like beam profile having a focus zone (7) being elongated in propagation direction (5), for which in particular only a central area of the incident laser beam provides contributions to a downstream end of the elongated focus zone (7).

7. The optical system (1) of anyone of the preceding claims, wherein the beam shaping element (31) is further configured for imposing a linear phase distribution, so that in particular a spatial separation of a usable beam portion (203A) from a disturbing beam portion (203B) is achieved by a lateral beam deflection (230) of the usable beam portion (203A).

8. The optical system (1) of anyone of the preceding claims, wherein
the elongated focus zone (7) comprises an aspect ratio of at least 10:1, for example 20:1 or more, and/or a maximum change of the lateral extent of the intensity distribution over the focus zone in a range of 50% or less, e.g. 20% or less or 10% or less; and/or
in the absence of a material (9) to be processed, the laser beam comprises areas downstream of the elongated focus zone (7) in which a radial intensity distribution comprises a section of a step-shaped increase in intensity, in particular with a flank facing radially inwards followed by a drop in intensity, which is slow in comparison to the step and decreases towards the outside.

9. The optical system (1) of anyone of the preceding claims, further comprising
a spatial filter unit (220) for filtering out a disturbing beam portion, in particular a central non-phase-modulated disturbing beam portion, and/or of beam portions having a higher diffraction order, wherein the spatial filter unit (220) is in particular arranged between the beam shaping element (31) and the near field optics (33B), for example, in the area of the input side focal plane of the near field optics (33 B); and/or
a scan unit (310) arranged in particular between the beam shaping element (31) and the near field optics (33B) for scanning the elongated focus zone (7) with respect to the material (9), wherein the scan unit (310) is arranged in particular in the area of the input side focal plane of the near field optics (33B); and/or
a beam preparation unit (13) for adapting the input intensity profile (41), the input divergence, and/or the polarization of the laser beam (3); and/or
an intermediate imaging system within the imaging system (33), in particular for generating a second focal plane for the use of a filter unit (220) and/or a scan unit (310).

10. The optical system (1) of anyone of the preceding claims, wherein the imposed phase distribution (43) is such that a virtual optical image (53) of the elongated focus zone (7) is attributed to the laser beam (3), the optical image (53) being located before the beam shaping element (31), and
the beam shaping distance (Dp) corresponds to a propagation length of the laser beam (3) within which the imposed phase distribution (43) transforms the transverse input intensity profile (41) into a transverse output intensity profile (51) in the region of the near field optics (33B), and the transverse output intensity profile (51) has, in comparison with the input intensity profile (41), a local maximum (49) lying outside of a beam axis (45).

11. A laser processing machine (21) for processing a material (7), which is in particular to a large extent transparent for the laser beam, with a laser beam (3) by modifying the material (7) in a focus zone (7), which is elongated in propagation direction (5) of the laser beam (3), comprising
a laser beam source (11);
an optical system (1) according to anyone of the preceding claims; and
a workpiece positioning unit (25) for positioning the material (9) as workpiece.

12. The laser processing machine of claim 11, further configured for performing a relative movement between the workpiece positioning unit (25) and the focus zone (7); and/or
further comprising
a control unit for setting a position of the focus zone (7) with respect to the workpiece positioning unit (25), and/or for setting a parameter of the laser beam (3) and/or the optical system (1), which causes an elongation of the elongated focus zone (7) in the direction upstream, wherein at the same time the position of the downstream end of the elongated focus zone (7) is maintained with respect to the workpiece positioning unit (25) essentially without a follow-up correction of a distance of a near field optics (33B) to the workpiece positioning unit (25).

13. The laser processing machine of claim 11 or 12, wherein the laser beam source (11) is further configured to generate a laser beam that modifies the material (9) by nonlinear absorption and that in particular can focus, for example, ps-laser pulses to a fluence of 2 J/cm2 within the elongated focus zone (7).

14. A method for beam shaping of a laser beam (3) with a transverse input intensity profile (41) for processing a material (9), which is in particular to a large extent transparent for the laser beam, by modifying the material (9) in a focus zone (7), which is elongated in propagation direction (5), the method comprising
imposing a beam shaping phase distribution (43) onto the transverse input intensity profile (41) for generating an elongated focus zone and additionally a largely spherical phase distribution with focusing action;
propagating the laser beam (3) over a beam shaping distance (Dp), after which the imposed phase distribution (43) has transferred the transverse input intensity profile (41) into a transverse output intensity profile (51); and
focusing the laser beam (3) into the focus zone (7) for forming a near field based on the output intensity profile (51).

15. The method of claim 14, wherein the imposing of the phase distribution (43) is performed, while an amplitude modulation is avoided to a large extent, and/or a linear phase distribution is imposed, and/or a disturbing beam portion, in particular a central non-modulated disturbing beam portion, and/or beam portions of higher diffraction order are filtered out, and/or the elongated focus zone (7) is scanned with respect to the material (9), and/or an elongation of the elongated focus zone (7) in direction upstream is caused, in particular by magnification of the input beam diameter and/or of the incident power, wherein at the same time the position of the downstream end of the elongated focus zone (7) is maintained with respect to the workpiece positioning unit (25) essentially without a follow up correction of a distance of a near field optics (33B) to the workpiece positioning unit (25).

## Revendications

1. Système optique (1) destiné à la formation de faisceau d'un faisceau de laser (3) pour l'usinage d'un matériau (9) largement transparent en particulier pour le faisceau de laser par modification du matériau (9) dans une zone focale (7) allongée en direction de propagation (5) avec
un élément de formation de faisceau (31), qui est constitué pour recevoir le faisceau de laser (3) avec un profil d'intensité d'entrée (41) transversal et appliquer au faisceau de laser (3) une caractéristique de phase (43) formant le faisceau par le biais du profil d'intensité d'entrée (41) transversal pour produire une zone focale (7) allongée et
un système optique de champ proche (33B), qui est disposé en aval du faisceau avec une distance de formation de faisceau (Dp) par rapport à l'élément de formation de faisceau (31) et qui est constitué pour focaliser le faisceau de laser (3) dans la zone focale (7), **caractérisé en ce que**
l'élément de formation de faisceau (31) est constitué en plus comme partie d'un système de reproduction (33) pour appliquer au faisceau de laser (3) en plus une caractéristique de phase avec effet focalisant de telle manière qu'une reproduction a lieu par la caractéristique de phase appliquée en plus de l'élément de formation de faisceau (31) en tant qu'effet focalisant de champ lointain et la focalisation a lieu par le système optique de champ proche (33B) en tant qu'effet focalisant de champ proche.

2. Système optique (1) selon la revendication 1, sachant que
l'élément de formation de faisceau (31) est constitué pour l'essentiel en tant que pur modulateur de phase de telle manière, en particulier que lors de l'application de la caractéristique de phase (43), le profil d'intensité d'entrée (41) est maintenu sur l'élément de formation de faisceau (31) en évitant largement une modulation d'amplitude, et/ou
l'élément de formation de faisceau (31) est formé pour l'utilisation en transmission ou en réflexion, sachant que l'application de la caractéristique de phase (43) a lieu de façon diffractive, et/ou
l'élément de formation de faisceau (31) est constitué comme un élément diffractif optique en particulier programmable ou à inscription fixe (31, 31A, 31B), en particulier comme un modulateur de lumière spatial, pour l'application de phase.

3. Système optique (1) selon la revendication 1 ou 2, sachant que le système de reproduction (33) est constitué avec un rapport de reproduction réducteur pour produire la zone focale allongée (7).

4. Système optique (1) selon la revendication 3, sachant que
l'élément de formation de faisceau (31) est constitué en plus comme partie du système de reproduction (33) pour appliquer au faisceau de laser (3) une caractéristique de phase sphérique avec effet focalisant.

5. Système optique (1) selon l'une quelconque des revendications précédentes, sachant que le rapport de reproduction est donné par un rapport X : 1, avec X ≥ 1 et l'élément de formation de faisceau (31) est disposé à une distance par rapport au système optique de champ proche (33B), qui correspond pour l'essentiel au maximum à (1+2X) fois une distance focale (f_{N}) du système optique de champ proche (33B).

6. Système optique (1) selon l'une quelconque des revendications précédentes, sachant que la caractéristique de phase appliquée formant le faisceau est constituée à cet effet pour produire dans le cas d'un faisceau de laser incident avec une répartition d'intensité gaussienne, au moins pour une partie du faisceau de laser incident (3), une zone de faisceau (55A, 55B) divergente, attribuée à une image optique virtuelle, qui comporte en aval du faisceau de l'élément de formation de faisceau (31) optique diffractif, une répartition d'intensité transversale (57A, 57B), qui diminue de l'intérieur vers l'extérieur et
cette répartition d'intensité transversale (57A, 57B) est présente en particulier en amont du faisceau d'un plan focal situé en aval du faisceau (340) du système optique de champ lointain (33A) et en particulier en plus, en amont du faisceau d'une formation d'une structure annulaire, d'une structure de segment annulaire limitée à une plage angulaire azimutale et/ou d'un maximum local et
une zone de faisceau appliquée à la phase (55A, 55B) comporte une caractéristique d'intensité latérale (57A, 57B) avec une section d'une hausse d'intensité en paliers, qui comporte en particulier un flanc (907) tourné radialement vers l'intérieur dans la zone située entre l'élément de formation de faisceau (31) et un plan focal, lequel est attribué au système optique de champ proche (33B) (33A) et/ou à la phase appliquée en plus à l'élément de formation de faisceau (31) avec effet focalisant et qui comporte en particulier un flanc tourné radialement vers l'extérieur dans la zone située entre le plan focal, lequel est attribué au système optique de champ proche (33B) et/ou à la phase appliquée en plus à l'élément de formation de faisceau (31) avec effet focalisant , et la zone focale (7) et/ou
la caractéristique de phase (43) est telle que la focalisation de la partie de faisceau appliquée à la phase de cette façon, constitue un profil de faisceau de type faisceau quasi de Bessel inverse et/ou un profil de faisceau de type faisceau quasi de Airy inverse avec une zone focale (7) allongée en direction de propagation (5), pour lequel en particulier seule une zone centrale du faisceau de laser incident contribue à une extrémité située en aval du faisceau de la zone focale (7) allongée.

7. Système optique (1) selon l'une quelconque des revendications précédentes, sachant que l'élément de formation de faisceau (31) est constitué en plus pour appliquer une caractéristique de phase linéaire de telle manière en particulier qu'une séparation spatiale d'une partie du faisceau utile (203A) est provoquée par une partie de faisceau parasite (203B) par une déviation de faisceau latérale (230) de la partie de faisceau utile (203A).

8. Système optique (1) selon l'une quelconque des revendications précédentes, sachant
que la zone focale (7) allongée comporte un rapport d'aspect d'au moins 10 : 1, par exemple 20 : 1 et plus, et/ou une modification maximale de l'expansion latérale de la répartition d'intensité (efficace) sur la zone focale dans un secteur de 50 % et moins, par ex. : 20 % et moins ou 10 % et moins et/ou
qu'en aval du faisceau de la zone focale (7) allongée, le faisceau de laser comporte des zones en absence d'un matériau à usiner (9) dans lesquelles une caractéristique d'intensité radiale comporte une section d'une hausse d'intensité en paliers, en particulier avec un flanc tourné radialement vers l'intérieur suivi d'une chute d'intensité diminuant plus lentement vers l'extérieur en comparaison du palier.

9. Système optique (1) selon l'une quelconque des revendications précédentes, en plus avec une unité de filtre (220) spatiale pour exfiltrer une partie de faisceau parasite, en particulier une partie de faisceau parasite centrale non modulée en phase et/ou des parties de faisceau d'ordre de diffraction plus élevé, sachant que l'unité de filtre (220) spatiale est disposée en particulier entre l'élément de formation de faisceau (31) et le système optique de champ proche (33B), par exemple dans le secteur du plan focal côté entrée du système optique de champ proche (33B) et/ou une unité d'exploration (310) disposée en particulier entre l'élément de formation de faisceau (31) et le système optique de champ proche (33B) pour explorer la zone focale (7) allongée concernant le matériau (9), sachant que l'unité d'exploration (310) est disposée en particulier dans le secteur du plan focal côté entrée du système optique de champ proche (33B) et/ou
une unité de préparation de faisceau (13) pour adapter le profil d'intensité d'entrée (41), la divergence d'entrée et/ou la polarisation du faisceau de laser (3) et/ou
un système de reproduction intermédiaire dans le système de reproduction (33), en particulier pour produire un deuxième plan focal pour la mise en œuvre d'une unité de filtre (220) et/ou d'une unité d'exploration (310).

10. Système optique (1) selon l'une quelconque des revendications précédentes, sachant que la caractéristique de phase appliquée (43) est de telle sorte qu'une image (53) optique virtuelle de la zone focale allongée (7), située devant l'élément de formation de faisceau (31) est attribuée au faisceau de laser (3), et
la distance de formation de faisceau (Dp) correspond à une longueur de propagation du faisceau de laser (3) dans laquelle la caractéristique de phase appliquée (43) transfère le profil d'intensité d'entrée (41) en un profil d'intensité de sortie transversal (51) dans la plage du système optique de champ proche (33B) et le profil d'intensité de sortie transversal (51) comporte un maximum (49) local se situant en dehors d'un axe de faisceau (45) en comparaison du profil d'intensité d'entrée (41).

11. Installation d'usinage au laser (21) pour l'usinage d'un matériau (7) largement transparent, en particulier pour le faisceau de laser, avec un faisceau de laser (3) par modification du matériau (7) dans une zone focale (7) allongée en direction de propagation (5) du faisceau de laser (3) avec
une source de faisceau de laser (11),
un système optique (1) selon l'une quelconque des revendications précédentes et
une unité de support de pièce (25) pour supporter le matériau (9) en tant que pièce.

12. Installation d'usinage au laser selon la revendication 11, constituée en plus pour exécuter un mouvement relatif entre l'unité de support de pièce (25) et la zone focale (7) et/ou en plus avec
une commande destinée au réglage d'une position de la zone focale (7), concernant l'unité de support de pièce (25) et/ou pour régler un paramètre du faisceau de laser (3) et/ou du système optique (1), qui produit un prolongement de la zone focale (7) allongée en direction en amont du faisceau, sachant que simultanément la position de l'extrémité située en aval du faisceau de la zone focale (7) allongée est maintenue pour l'essentiel eu égard à l'unité de support de pièce (25) pour l'essentiel sans correction ultérieure d'une distance entre un système optique de champ proche (33B) et l'unité de support de pièce (25).

13. Installation d'usinage au laser selon la revendication 11 ou 12, sachant que la source du faisceau de laser (11) est constituée en plus pour produire un faisceau de laser, qui modifie le matériau (9) par absorption non linéaire et peut être focalisée en particulier pour, par exemple, des impulsions de laser « ps » à une fluence de 2 J/cm² dans la zone focale (7) allongée.

14. Procédé destiné à la formation de faisceau d'un faisceau de laser (3) avec un profil d'intensité d'entrée transversal (41) pour l'usinage d'un matériau largement transparent (9) en particulier pour le faisceau de laser par modification du matériau (9) dans une zone focale (7) allongée en direction de propagation (5) avec les étapes suivantes :
application d'une caractéristique de phase (43) formant le faisceau par le biais du profil d'intensité d'entrée (41) transversal pour produire une zone focale allongée et en plus d'une caractéristique de phase largement sphérique avec effet focalisant,
propagation du faisceau de laser (3) sur une distance de formation de faisceau (Dp) après que la caractéristique de phase appliquée (43) ait transféré le profil d'intensité d'entrée (41) transversal dans un profil d'intensité de sortie (51) et
focalisation du faisceau de laser (3) dans la zone focale (7) pour constituer un champ proche en se basant sur le profil d'intensité de sortie (51).

15. Procédé selon la revendication 14, sachant que l'application de la caractéristique de phase (43) est exécutée en évitant largement une modulation d'amplitude et/ou qu'en plus une caractéristique de phase linéaire est appliquée et/ou qu'une partie de faisceau parasite, en particulier une partie de faisceau parasite centrale non modulée et/ou des parties de faisceau d'ordre de diffraction plus élevé, sont exfiltrées et/ou la zone focale (7) allongée est explorée concernant le matériau (9) et/ou un prolongement de la zone focale (7) allongée est provoqué en direction en amont du faisceau, en particulier par agrandissement du diamètre de faisceau d'entrée et/ou de la puissance incidente, sachant que simultanément la position de l'extrémité située en aval du faisceau de la zone focale (7) allongée est pour l'essentiel maintenue eu égard à l'unité de support de pièce (25) pour l'essentiel sans correction ultérieure d'une distance entre un système optique de champ proche (33B) et l'unité de support de pièce (25).
